Europäisches Patentamt

European Patent Office

Office européen des brevets

(19)

(11) Veröffentlichungsnummer: **0 372 261**
**A1**

# EUROPÄISCHE PATENTANMELDUNG

(21) Anmeldenummer: 89120957.9

(22) Anmeldetag: **11.11.89**

(51) Int. Cl.⁵: **H02B 13/035**

(30) Priorität: 03.12.88 DE 3840850

(43) Veröffentlichungstag der Anmeldung:
**13.06.90 Patentblatt 90/24**

(84) Benannte Vertragsstaaten:
**DE FR IT SE**

(71) Anmelder: **Sachsenwerk Aktiengesellschaft**
**Einhauser Strasse 9**
**D-8400 Regensburg 1(DE)**

(72) Erfinder: **Reichl, Erwin, Dipl.-Ing.**
**Spessartstrasse 4**
**D-8409 Tegernheim(DE)**
Erfinder: **Harz, Gerhard, Dipl.-Ing. (FH)**
**Weinweg 49**
**D-8400 Regensburg(DE)**

(74) Vertreter: **Breiter, Achim, Dipl.-Ing.**
**AEG Aktiengesellschaft, Theodor-Stern-Kai 1**
**D-6000 Frankfurt am Main 70(DE)**

(54) Längskupplung für Sammelschienen.

(57) Die Erfindung betrifft eine Längskupplung von Sammelschienen in Mehrfachsammelschienensystemen, die besonders für gekapselte und geschotte Schaltanlagen mit Druckgasisolierung geeignet ist. Für jedes Sammelschienensystem (I,II,III) ist ein Kuppelfeld (KFI,KFII,KFIII) vorgesehen, in dem der erste Sammelschienenendabschnitt (6I,6II,6III), wenigstens der erste Trennschalter (2) und der Kuppelschalter (3) eingebaut sind, während der zweite Sammelschienenendabschnitt (7I,7II,7III) erfindungsgemäß immer in einem benachbarten Kuppelfeld (KFII, KFI) angeordnet ist. Die Erfindung gibt außerdem Lösungen für eine besonders raumsparende Führung der Kuppelleitungen (8,9) an.

Figur 1

Die Erfindung bezieht sich auf eine Längskupplung für Sammelschienen von in gekapselten Schaltanlagen eingebauten, mehrphasigen, durch Schottwände voneinander getrennten Mehrfachsammelschienensystemen nach dem Oberbegriff des ersten Anspruchs.

In der Druckschrift "stahlblechgeschotte, SF6-isolierte Schaltanlagen Typenreihe ZV2", Calor Emag (Druckschrift 13/76/H) ist eine Doppelsammelschienenanlage beschrieben, für die die auf Seite 7 angegebene Längskupplung mit Leistungsschaltern für jedes der beiden Systeme den im Oberbegriff der vorliegenden Anmeldung angegebenen Merkmalen entspricht.

Die bekannte Schaltanlage weist zwei im unteren Schaltanlagenbereich eingebaute übereinander liegende Sammelschienensysteme auf, von denen jedes über einen Dreistellungsschalter mit einem Leistungsschalter und mit dem Kabelanschluß verbunden ist. Im Oberteil eines jeden Abgangsfeldes kann der obere Anschluß des Leistungsschalters ggf. über Stromwandler zu dem Kabelanschluß geführt sein. Jedes der beiden Kuppelfelder enthält den ersten Sammelschienenendabschnitt des Systems, den zugehörigen ersten Dreistellungsschalter, den Kuppelschalter, der als Leistungsschalter ausgeführt ist und die Durchführung für die außerhalb der Kapselung angeordnete Kuppelleitung. Im Oberteil der Kuppelfelder können auch Strom- und Spannungswandler angeordnet sein. Neben den beiden Kuppelfeldern ist ein Zusatzfeld angeordnet, in dem die zweiten Sammelschienenendabschnitte für beide Systeme mit je einem Dreistellungsschalter untergebracht sind. Letztere sind über Anschlußstellen mit den Kuppelleitungen verbunden, die zwei übereinander liegenden Ebenen von den Kuppelfeldern an das Zusatzfeld herangeführt sind, da sich die Kuppelleitungen einzelner Phasen der beiden Systeme kreuzen. Das Zusatzfeld weist sonst keine aktiven Teile auf.

Die bekannte Schaltanlage benötigt also für die Längskupplung beider Systeme außer je einem Kuppelfeld ein drittes Feld als Zusatzfeld, in dem jeweils die beiden zweiten Sammelschienenendabschnitte und die dazu gehörigen Dreistellungsschalter untergebracht sind. Außerdem vergrößert sich auch die Höhe der Schaltanlage durch die oben aufgesetzten Kuppelleitungen beider Systeme. Eine Erweiterung der bekannten Schaltanlage auf ein Dreifachsammelschienensystem würde bezüglich der Längskupplung einen noch größeren Raumbedarf im Gebäude erfordern, da zu den 3 Kuppelfeldern zwei Zusatzfelder und in Richtung der Höhe drei Ebenen mit Kuppelleitungen unterzubringen wären.

Aus dem BBC-Taschenbuch für Schaltanlagen, 8. Auflage, ist auf der Seite 414 ein Schaltplan für eine Längs- und Querkupplung für Dreifachsammelschienen dargestellt. Bei der angegebenen Lösung ist in jedem System ein Längstrennschalter, der durch einon Kuppelschalter überbrückt werden kann, vorgesehen. Ein solches System ist sehr geräteintensiv und räumlich aufwendig und somit für gekapselte und vor allem druckgasisolierte Schaltanlagen nicht geeignet.

Der Erfindung liegt die Aufgabe zugrunde, Längskupplungen von Mehrfachsammelschienensystemen mit einem Kuppelschalter für jedes System bei einem minimalen Aufwand bezüglich des Schaltanlagenvolumens so zu realisieren, daß die an die Kuppelfelder angrenzenden Einspeise- oder Abgangsfelder in ihrem inneren Aufbau unverändert bleiben, ohne Teile der Kupplungen in ihrem Innenraum aufnehmen zu müssen. Die Aufgabe wird durch die kennzeichnenden Merkmale des ersten Patentanspruchs gelöst.

Die Erfindung eignet sich dabei besonders für die gekapselten druckgasisolierten Schaltanlagen des Mittelspannungsbereichs bis hinauf zu einer Nennspannung von 72,5 kV. Bei diesen Schaltanlagen sind Längstrennungen bzw. -kupplungen im Verlauf der Sammelschiene, wie sie in luftisolierten Schaltanlagen weit verbreitet sind, nicht ohne große Schwierigkeiten realisierbar. Von den Bausteinen der verschiedenen Systeme her gesehen bieten sich vielmehr Lösungen an, bei denen die zu trennenden und zu kuppelnden Sammelschienenendabschnitte gegeneinander isoliert und abgeschottet sind, während die zugehörigen Schaltgeräte in den sonst zur Einspeisung oder als Abgang vorgesehenen Schalter- und Anschlußräumen eingebaut sind. Ein solcher Anlagentyp für Doppelsammelschienen wurde als Stand der Technik angegeben; pro Sammelschienensystem werden bei der bekannten Längskupplung nicht zwei Feldbreiten, sondern für das Doppelsammelschienensystem insgesamt 3 Feldbreiten für beide Systeme in Verbindung mit außenliegenden Kuppelleitungen in 2 Ebenen verwendet.

Demgegenüber benötigt die erfindungsgemäße Längskupplung nur 2 Feldbreiten bei Doppelsammelschienenanlagen und je eine weitere Feldbreite für jedes weitere Sammelschienensystem. Die Kuppelleitungen der beiden ersten Systeme sind im Prinzip gekreuzt, sie erfordern auf Grund von weiteren vorteilhaften Details aber nur eine Ebene zur Führung der externen Abschnitte der Kuppelleitungen auf der Rückseite und/oder Oberseite der Schaltanlage. Die Erfindung läßt sich bei verschiedenen Sammelschienenanordnungen einsetzen, so z.B. bei übereinander oder nebeneinander angeordneten Sammelschienensystemen, ferner bei Schaltanlagen mit unten- oder obenliegenden Anschlußräumen.

In den Unteransprüchen sind vorteilhafte Weiterbildungen der Erfindung, angepaßt an verschiedene Schaltanlagensysteme, angegeben.

Als Kuppelleitungen können sowohl gasisolierte oder feststoffisolierte, einpolig gekapselte Stromschienen, als auch dreipolig gekapselte Systeme eingesetzt werden.

Vor allem mit den erstgenannten Schienen sind gemeinsam mit nahezu unveränderten Grundfeldern flexible Lösungen erzielbar. Dazu können die außerhalb der Kapselung geführten Kuppelleitungen auch an den sonst für Kabelanschlüsse vorgesehenen Anschlußstellen mit dem Kuppelschalter verbunden werden.

Die erfindundgemäßen Längskupplungen lassen sich auch mit Lastschaltern ausrüsten und so als Längstrennungen, wahlweise auch in Verbindung mit Erdungsmöglichkeiten für die Sammelschienenabschnitte verwenden.

Das Wesen der vorliegenden Erfindung soll an Hand der folgenden Figuren näher erläutert werden.

Es stellen dar:

Figur 1 Schematisches Schaltbild der erfindungsgemäßen Längskupplung eines Dreifachsammelschienensystems in einphasiger Darstellung.

Figur 2a Schnitt I-K durch das Kuppelfeld KFII eines übereinander liegenden Dreifachsammelschienensystems mit übereinander angeordneten Sammelschienen und außen geführten Kuppelleitungen.

Figur 2b Rückansicht zu Figur 2a.

Figur 3a Schnitt A-B durch Kuppelfeld KFII eines Dreifachsammelschienensystems ähnlich Figur 2a; innenliegende Kuppelleitung für das System 1.

Figur 3b Vorderansicht zu Figur 3a, offene Frontabdeckung.

Figur 3c Rückansicht zu Figur 3a.

Figur 3d Rückansicht ähnlich Figur 3c bei außenliegenden Kuppelleitungen in allen Systemen.

Figur 3e Perspektivische Darstellung der Leitungsführung des Systems I gemäß den Figuren 3a und 3b.

Figur 4a Schnitt C-D durch Kuppelfeld KFI eines Doppelsammelschienensystems mit obenliegenden Systemen I und II und im Dreieck angeordneten Sammelschienen; schematische Darstellung des Leitungsverlaufs.

Figur 4b Vorderansicht zu Figur 4a, offene Frontseite.

Figur 4c Rückseite zu Figur 4a.

Figur 4d Rückseite zu Figur 4a mit kreuzungsfreien Kuppelleitungen in Außenanordnung.

Figur 4e Draufsicht zu Figur 4d.

Figur 5a Längskupplung für ein Doppelsammelschienensystem mit oben angeordnetem Anschlußraum; Schnitt E-F durch Kuppelfeld KFI.

Figur 5b Rückansicht zu Figur 5a) bei abgenommener rückseitigen Abdeckung 12 in KFII und teilweise abgenommenen Abdeckung in KFI.

Figur 6a Schnitt G-H durch Kuppelfeld KFI eines Doppelsammelschienensystems mit dem 2.Trennschalter im Sammelschienenraum, kreuzungsfreie außenliegende Kuppelleitungen in beiden Systemen.

Figur 6b Rückansicht zu Figur 6a.

Figur 7 Schnitt A-B durch Kuppelfeld KFII nach Figur 2c; Dreistellungsschalter anstelle der Trennschalter.

In allen Figuren sind für gleichartig eingesetzte Teile oder Betriebsmittel dieselben Bezugszeichen angegeben.

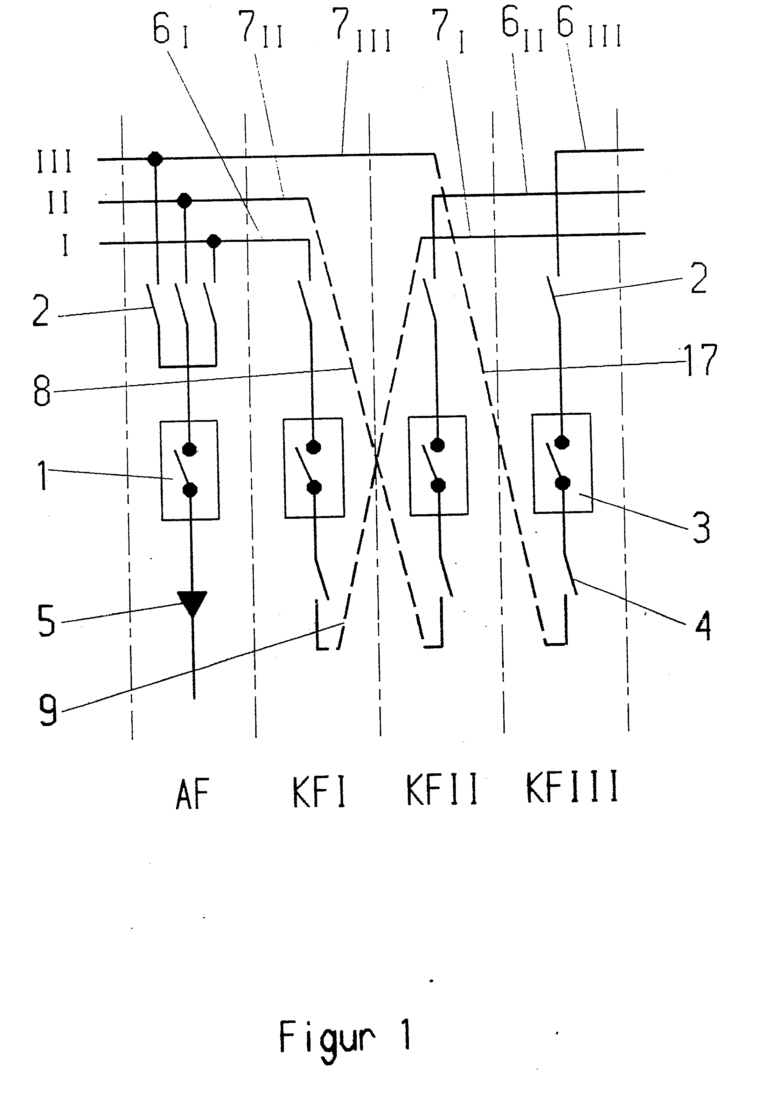

In der Figur 1 ist der Erfindungsgedanke in einer einfachen Schaltungsskizze in einphasiger Darstellung erläutert. Im Abgangsfeld AF sind drei Sammelschienensysteme I, II, III über je einen Sammelschienentrennschalter 2 pro System und einen Leistungsschalter 1 mit dem Kabelanschluß 5 verbunden. Im Anschlußraum dieses Feldes können außerdem Strom- und Spannungswandler vorgesehen sein. Für die Längskupplung ist für jedes System I,II,III ein Kuppelfeld KFI, KFII, KFIII, vorhanden, in dem jeweils ein Kuppelschalter 3 mit seinem ersten Anschluß über den zum System gehörenden ersten Trennschalter 2 mit den ersten Sammelschienenendabschnitten 6I,6II oder 6III verbunden ist, während der zweite Anschluß des Kuppelschalters 3 über einen zweiten Trennschalter 4 und die mit gestrichelten Linien dargestellten Kuppelleitungen 8, 9 und 17 an die zweiten Sammelschienenendabschnitte 7I, 7II oder 7III angeschlossen ist. Die zweiten Sammelschienenendabschnitte 7I, 7II, 7III der drei Systeme sind dabei erfingemäß in den zwei Kuppelfeldern KFI und KFII untergebracht. Die Anschlußstellen der in schräger Richtung geführten Kuppelleitungen 8 und 9 der Systeme I und II liegen dabei kreuzweise gegenüber, die Kuppelleitungen kreuzen sich also bei geradlinigem Verlauf. Bei einer erfindungsgemäßen Längskupplung für ein Dreifach-Sammelschienensystem schließt sich nach Figur 1 an das Kuppelfeld KFII des zweiten Systems das analog bestückte Kuppelfeld KFIII des dritten Systems an, dessen Kuppelleitungen 17 kreuzungsfrei zu dem im benachbarten Kuppelfeld KFII eingebauten zweiten Sammelschienenendabschnitt 7III verlaufen.

Läßt man in der Figur 1 das System III mit dem Kuppelfeld III und allen sonstigen zugehörigen Anlagenteilen weg, so hat man die erfindungsgemäße Lösung für die Längskupplung eines Doppelsammelschienensystems I und II. Aus Figur 1 wird deutlich, daß mit der erfindungsgemäßen Längskupplung die Länge der Schaltanlage nur durch ein Kuppelfeld pro System, das dieselben Grundabmessungen, wie ein Abgangsfeld aufweist, beeinflußt wird, während die Abgangs- oder Einspeisefelder in ihrer Grundausführung verwendbar sind, ohne Teile der Kupplungen aufnehmen zu müssen.

In Figur 1 sind die Kuppelleitungen 8, 9 und 17 gestrichelt dargestellt, sie sind im wesentlichen auf der Rückseite der Schaltanlagen angeordnet. Ihr räumlicher Aufbau unter Berücksichtigung der Leiter für ein dreiphasiges Netz ist für verschiedene Schaltanlagenausführungen aus den folgenden Figuren ersichtlich.

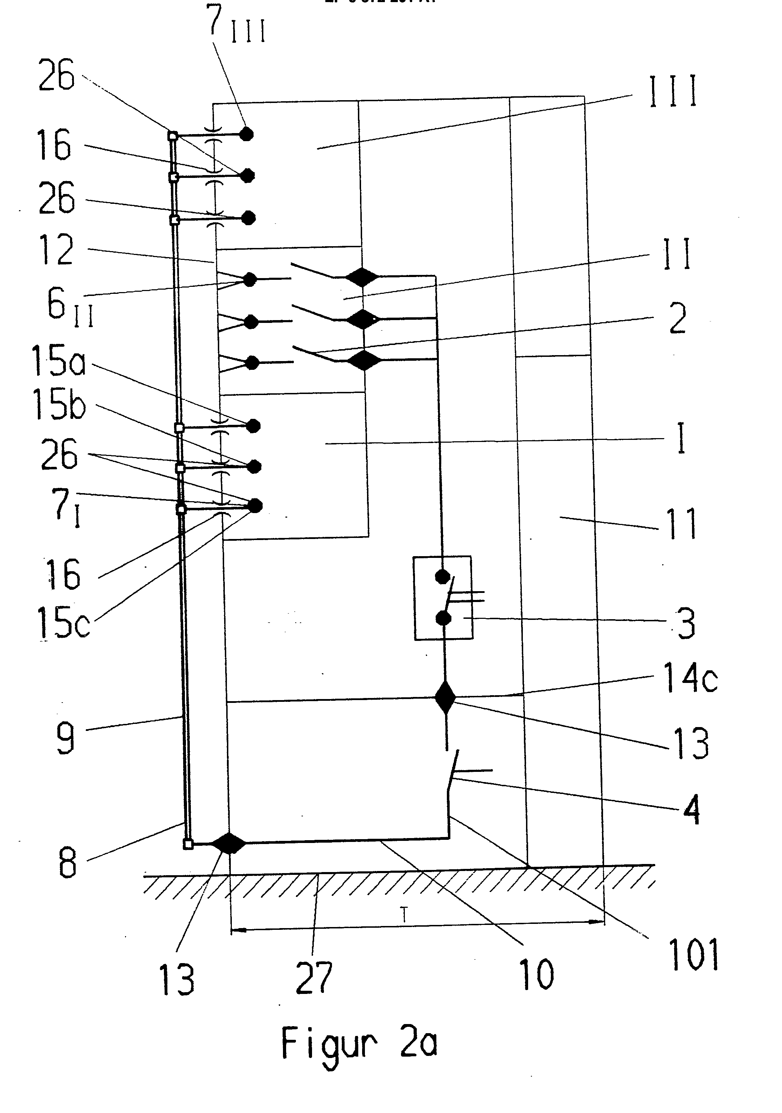

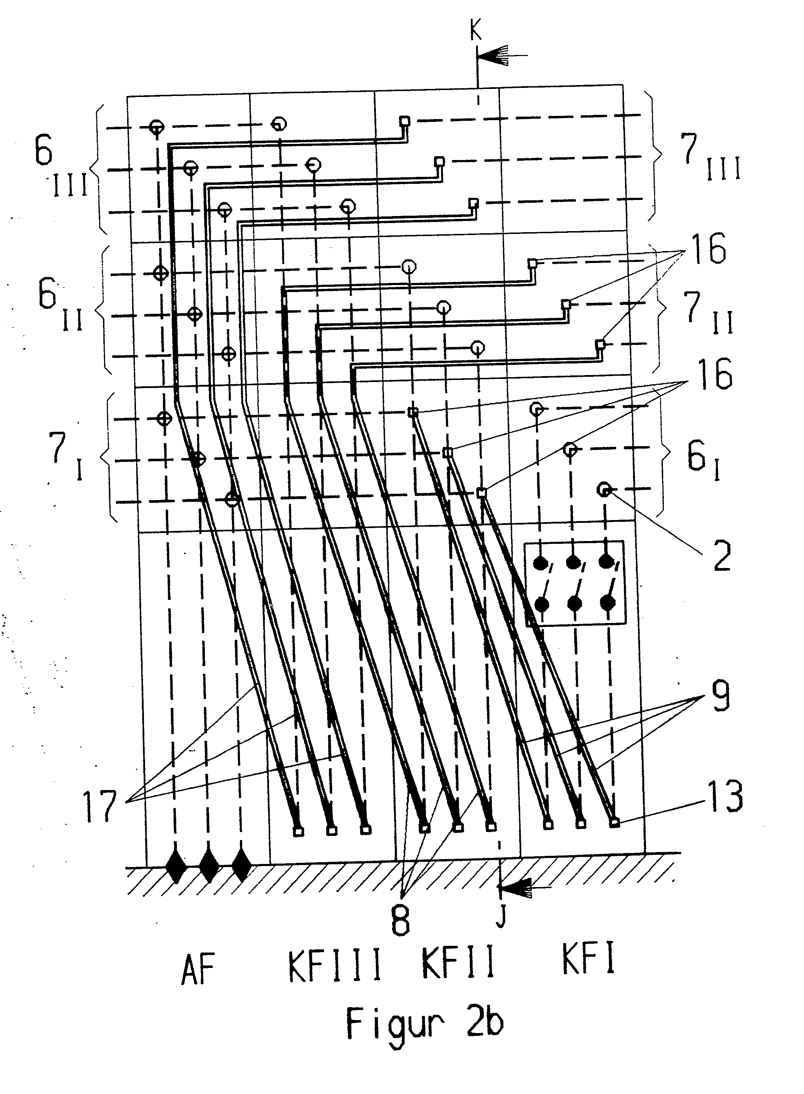

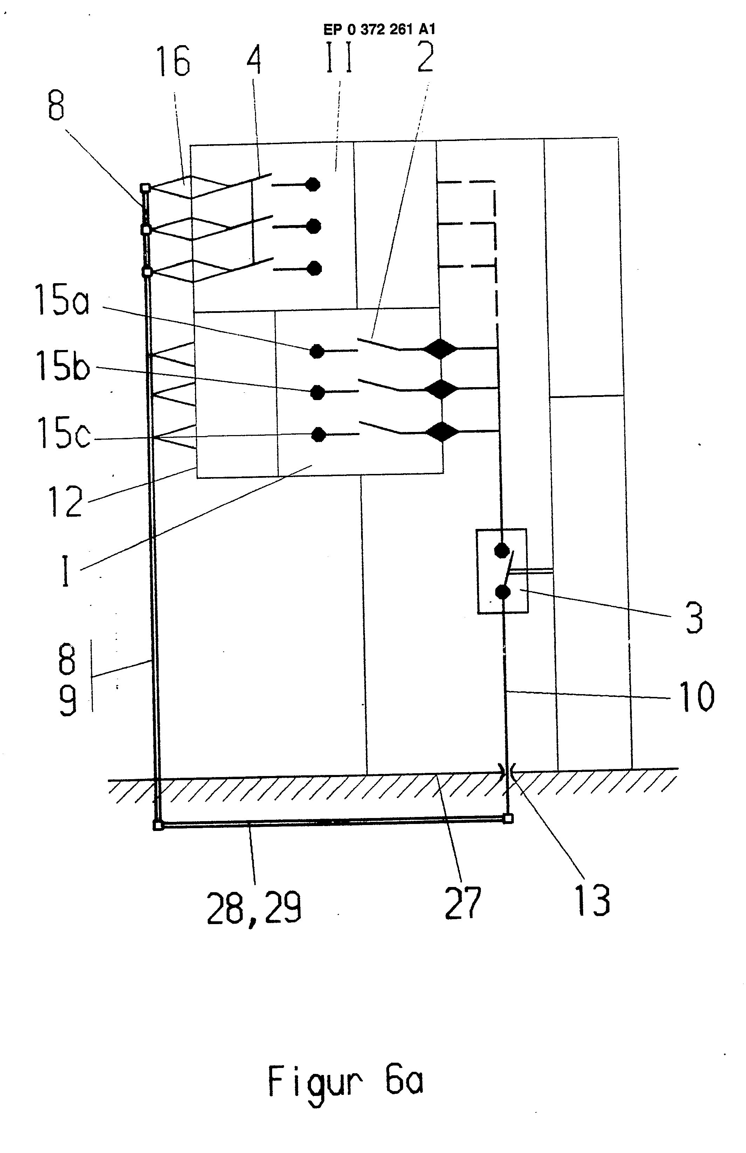

In den Figuren 2a und 2b sind die drei Sammelschienensysteme I, II und III übereinander und die Sammelschienen 15a, 15b, 15c eines jeden Systems in einer vertikalen Ebene angeordnet. In den Sammelschienenräumen der einzelnen Systeme I, II und III befinden sich in den Kuppelfeldern KFI, KFII und KFIII die ersten Sammelschienenendabschnitte 6I, 6II, 6III und die zugehörigen ersten Trennschalter 2 in demselben Schottraum. Im davor liegenden Schalterraum ist der mit dem ersten Trennschalter 2 verbundene Kuppelschalter 3 und der daran anschließende zweite Trennschalter 4 angeordnet. Letzterer kann unterhalb des Kuppelschalters 3 im vertikalen Leitungsverlauf oder auch phasenweise in den horizontalen Leitungsstücken 10 eingebaut sein. Die Leitungsstücke 10 verbinden den zweiten Trennschalter 4 mit den Durchführungen 13, die in Figur 2a in der rückseitigen Abdeckung 12 angeordnet sind; sie können aber auch bei vertikaler Leitungsführung in die Kabelraumabdeckung 27 eingebaut werden (siehe Figur 6a).Eine Schottwand 14c nach Figur 2a, durch die die abgewinkelten Leitungsstücke 101 mittels Durchführungen 13 geführt sind, kann zusätzlich in jedem Kuppelfeld KFI, KFII, KFIII die Möglichkeit einer Fehlerausbreitung zwischen den beiden Sammelschienenabschnitten eines Systems vermindern.

Außerdem sind gemäß dem kennzeichnenden Merkmal des ersten Patentanspruchs im Kuppelfeld KFI die zweiten Sammelschienenendabschnitte 7II und im Kuppelfeld KFII die Endabschnitte 7I des ersten Systems I und die Endabschnitte 7III des dritten Systems III angeordnet. In Kuppelfeld KFIII sind in den Systemen I und II durchgehende Abschnitte zum Anschluß der Endabschnitte an die restlichen Sammelschienen des jeweiligen Systems vorhanden. Bei der vorliegenden Ausführung der Längskupplung sind die Verbindungsstellen 26 der zweiten Sammelschienenendabschnitte 7I, 7II und 7III in derselben Weise gestaffelt, wie die Abzweige der ersten Trennschalter 2 bei den ersten Endabschnitten 6I, 6II, 6III, die Verbindungsstellen 26 sind dabei an die in der rückseitigen Abdeckung 12 angebrachten Anschlußstellen 16 angeschlossen.

Die außenliegenden Kuppelleitungen 8,9 und 17 verbinden in jedem System I, II, III die zusammengehörigen Phasen der ersten und zweiten Sammelschienenendabschnitte 6I-7I; 6II-7II; 6III-7III zwischen den Durchführungen 13 und den Anschlußstellen 16. Die Abgangs- (AF) und die Kuppelfelder KFI, KFII, KFIII sind zur Frontseite hin durch einen Antriebs-und Steuerschrank 11 in üblicher Weise abgeschlossen.

Die Kuppelfelder weichen bei der vorliegenden Ausführung bezüglich ihres inneren Ausbaus in folgenden Punkten nur geringfügig von den Abgangsfeldern ab:

a) Einbau eines zweiten Trennschalters (4), der entweder im geradlinigen Leitungsverlauf mit dem Kuppelschalter verbunden ist oder in einem nach hinten abgewinkelten,

b) zur Verbindung der Kuppelschalter (3) bzw. der zweiten Trennschalter (4) mit außenliegenden Kuppelleitungen sind Durchführungen (13) entweder in der rückseitigen Abdeckung (12) oder in der Kabelraumabdeckung (27) vorzugsweise an der Stelle der Kabelanschlüße vorgesehen,

c) Einbau von Anschlußstellen (16) in die Sammelschienenräume der zweiten Endabschnitte (7I, 7II, 7III).

Die nahezu völlige Übereinstimmung des inneren Aufbaus dieser Schaltfeldausführung erlaubt eine sehr flexible Disposition und Auftragsabwicklung der erfindungsgemäßen Kuppelfelder für die Längskupplung. Diese Ausführungsform wird mit Hilfe einer besonderen Leitungsführung der außenliegenden Kuppelleitungen 8, 9 und 17 ermöglicht, wie sie in einen Beispiel in Figur 2b angegeben ist. Die Sammelleitungen 8,9 und 17 aller Systeme I,II und III sind dabei in einer Ebene auf der Rückseite der Schaltanlage angeordnet. Die Kuppelleitungen 9 des Systems I verlaufen von den Durchführungen 13 geradlinig phasenweise nahezu parallel zu den Anschlußstellen 16 und überbrücken dabei die Feldteilung. Die Kuppelleitungen 8 des Systems II und gegebenenfalls die Kuppelleitungen 17 des Systems III schließen sich seitlich an und führen zu den Anschlußstellen 16 der jeweiligen Systeme. Sie umgehen dabei die Anschlußstellen 16 des Systems I bzw. II durch eine abgewinkelte Formgebung. Dabei sind bei Doppelsammelschienenanlagen die Kuppelleitungen des zweiten Systems II und bei Dreifachsammelschienenanlagen die Kuppelleitungen des dritten Systems III jeweils ganz oder teilweise auf der Rückwand des benachbarten Abgangsfelds AF angeordnet, ohne daß dabei dessen Innenraum in Mitleidenschaft gezogen wird. Es kann lediglich erforderlich sein, auf der rückseitigen Abdeckung des Feldes AF Stützpunkte für die Kuppelleitungen 8 bzw. 17 anzubringen.

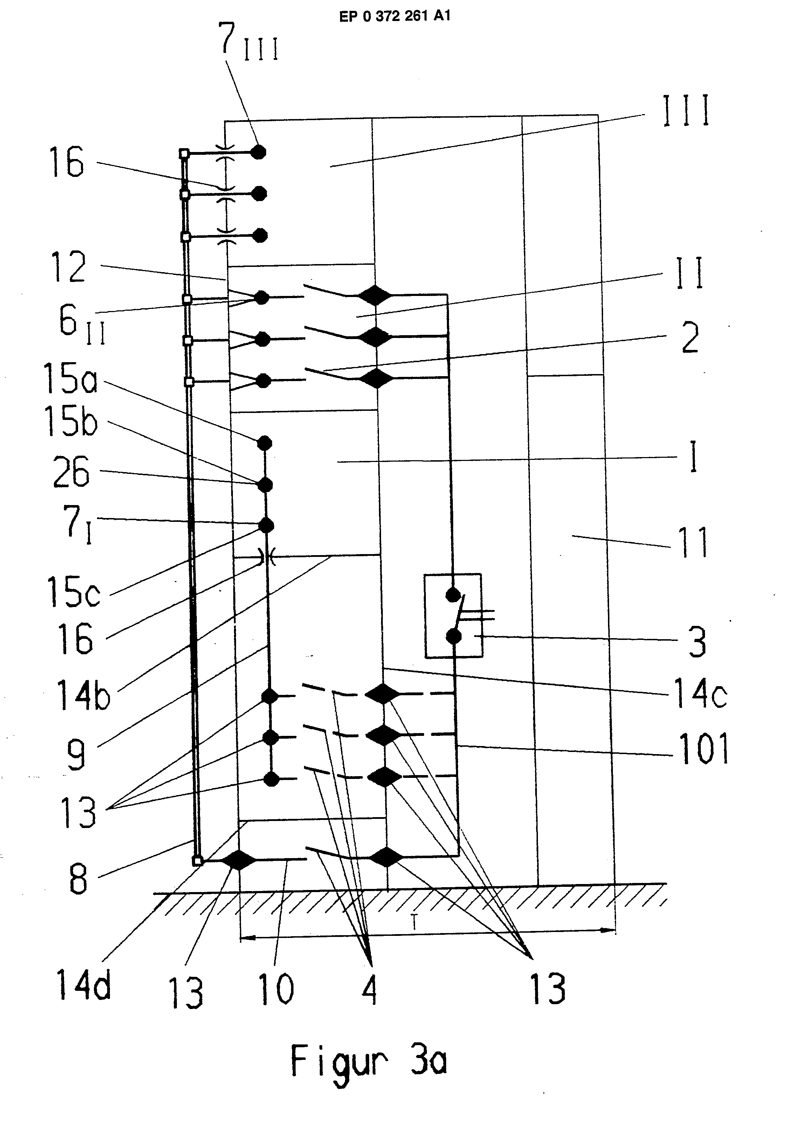

Der Aufbau der Schaltanlage nach den Figuren 3a bis 3c entspricht exakt dem der Figuren 2a, 2b. Die Kuppelleitungen 9 des Systems I, dessen Sammelschienen dem Kuppelschalter 3 bzw. dem zweiten Trennschalter 4 am nächsten liegen, ist bei dieser Ausführung innerhalb der Kapselung der Kuppelfelder KFI und KFII geführt, sie durchdringen dabei die zwischen beiden Feldern vorgesehene vertikale Schottwand 14a in einer besonders raumsparenden Weise, wie im folgenden beschrieben. Die Kuppelleitungen 8 des Systems II und gegebenenfalls die Kuppelleitungen 17 des Systems III sind, wie bei dem vorher beschriebenen Beispiel, nach den Figuren 2a und 2b auf der Schaltanlagenrückseite angebracht. Da diese Leitungen nicht in derselben Ebene wie die Kuppelleitungen 9 des Systems I verlaufen, können sie alle geradlinig und nahezu parallel zueinander angeordnet sein.

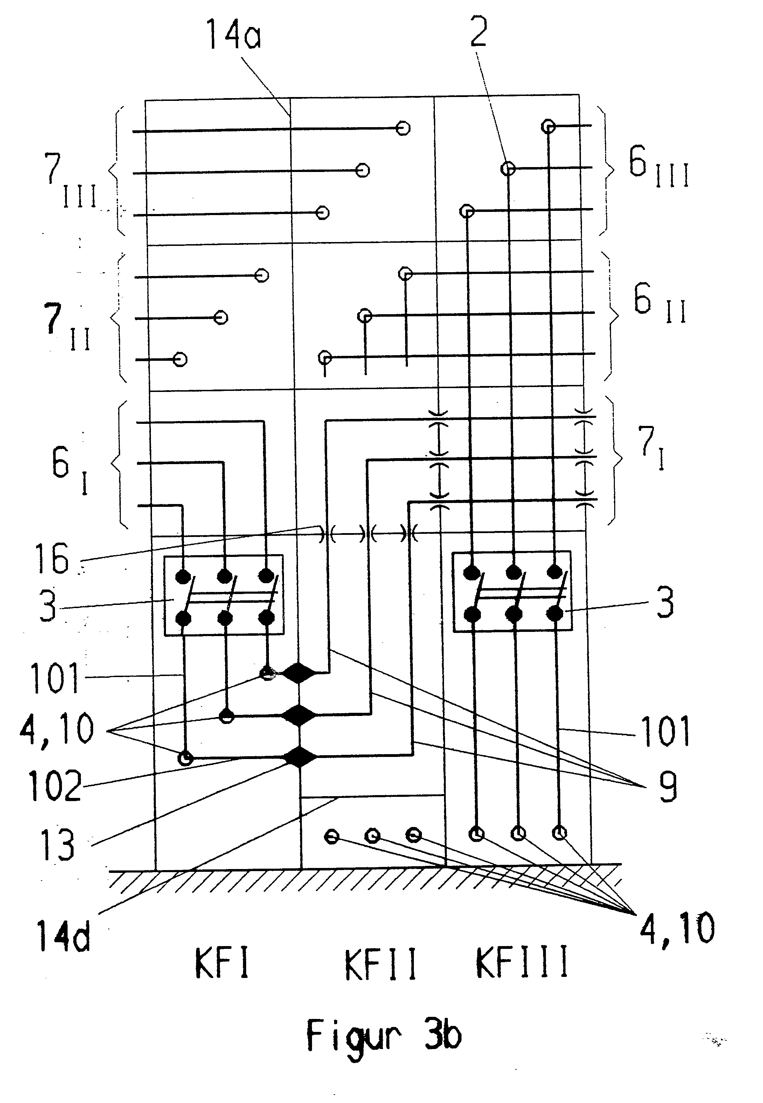

Die Figur 3b zeigt die drei Kuppelfelder KFI, KFII und KFIII von der Frontseite nach Wegnahme der Antriebs- und Steuerschränke 11. In KFIII und KFI sind die dreipoligen Kuppelschalter 3 mit ihren Verbindungen zu den jeweiligen ersten Sammelschienenendabschnitten 6III und 6I, sowie zu den zweiten Trennschaltern 4 über die abgewinkelten Leitungsstücke 101 zu erkennen, während in KFII die beiden Schaltgeräte 3 und 4 sowie die vertikale Schottwand 14c nicht dargestellt sind, um den Verlauf der hinter den Schaltgeräten liegenden Kuppelleitungen 9 des Systems I besser verfolgen zu können.

Die Leitungsführung des Systems I erfolgt nach den Figuren 3a und 3b ausgehend von den Endabschnitten 6I der drei Sammelschienen 15a, 15b, 15c über die im Sammelschienenraum befindlichen ersten Trennschalter 2 durch die vertikale Schottwand 14c zum Kuppelschalter 3. Die zweiten Trennschalter 4 sind in diesem Fall in die horizontalen Leitungsabschnitte 10 einbezogen und über Durchführungen 13 und abgewinkelte Abschnitte 101 mit dem Kuppelschalter 3 verbunden. Zur Verhinderung der Störungsausbreitung zwischen den Sammelschienenabschnitten eines jeden Systems sind auch bei diesem Anwendungsbeispiel der Erfindung die zweiten Trennschalter 4 gegen die Kuppelschalter 3 durch eine vertikale Schottwand 14c abgeteilt.

Insbesondere aus den Figuren 3a und 3b ist ferner zu ersehen, daß die Kuppelleitungen des Systems I im Kuppelfeld KFI von den hinteren Anschlüssen des zweiten Trennschalters 4 über die abgewinkelten Leitungsabschnitte 102 zu den in der vertikalen Schottwand 14a angebrachten Durchführungen 13 verlaufen. Die einmal abgewinkelten Kuppelleitungen 9 führen im Kuppelfeld KFII (Figur 3a) mit allen drei Phasen in einer durch die Achsen der Sammelschienen 15a, 15b, 15c bestimmten Ebene von den Durchführungen 13 zu den Anschlußstellen 16 in der horizontalen Schottwand 14b und von dort zu den Verbindungsstellen 26 mit den zweiten Sammelschienenendabschnitten 7I. An diesen Verbindungsstellen 26 enden phasenweise die Endabschnitte 7I mit jeweils ausreichendem Abstand zur Anschlußstelle 16 der Nachbarphase. Die Kuppelleitungen 9 könnten aber auch in einer zur Ebene der Sammelschienenachsen parallelen Ebene verlaufen, um so die unterschiedlichen Längen den zweiten Sammelschienenendabschnitt 7I zu vermeiden und die Verbindungsstellen 26 phasenweise so zu staffeln, wie in den ersten Sammelschienenendabschnitten bzw. wie in den Abgangsfeldern.

Im Kuppelfeld KFII sind nach Figur 3a und 3b im unteren Teil die Leitungsstücke 10 des Systems II und die Kuppelleitungen 9 des Systems I angeordnet; sie sind durch die horizontale Schottwand 14d gegeneinander getrennt.

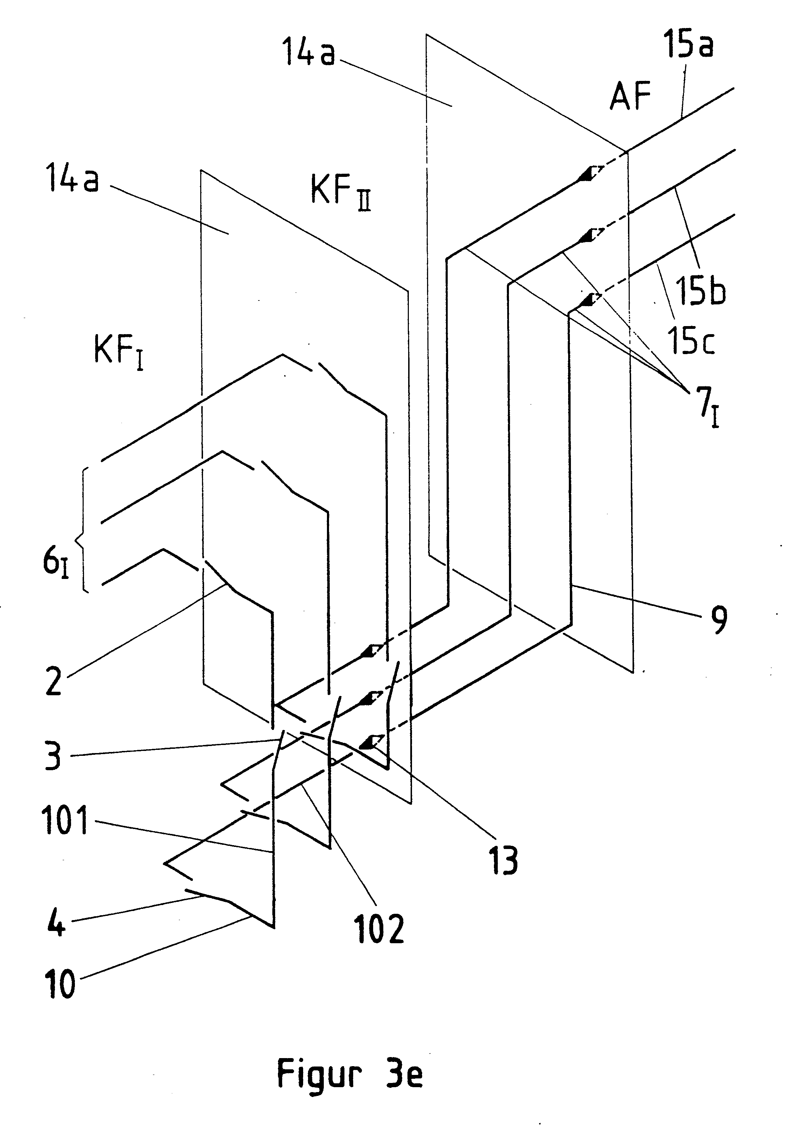

Zum besseren Verständnis der Leitungsführung des Systems I ist diese unter Verweis auf die Figuren 3a und 3b in Figur 3e in perspektivischer Darstellung gezeigt. So verlaufen vom linken Blattrand nach rechts oben die ersten Sammelschienenendabschnitte 6I im Zuge des Sammelschienenverlaufes. An sie schließen sich im rechten Winkel dazu die ersten Trennschalter 2 in jeder Phase an. Dabei ist die Schottwand zwischen dem Sammelschienenraum und dem Schalterraum aus Gründen der besseren Verständlichkeit nicht mit dargestellt. Von den Trennschaltern 2 führen die Leitungen phasenweise zum in vertikaler Richtung angeordneten Kuppelschalter 3 und von dort über die abgewinkelten Leitungsstücke 10, 101 zu den horizontal angeordneten zweiten Trennschaltern 4. In der Zeichnung ist zu erkennen, daß die drei Phasen dieses Trennschalters 4 analog Trennschalter 2 in der Höhe gestaffelt eingebaut sind. Die hinteren Anschlüsse dieses Schalters stoßen auf die abgewinkelten Abschnitte 102, die die Verbindung zu den drei vertikal übereinander angeordneten Durchführungen 13 in der Schottwand 14a darstellen. Hinter der Schottwand führen alle drei Phasen in ein- und derselben Ebene weiter zu den Kuppelleitungen 9 und den im rechten Winkel dazu angeordneten zweiten Sammelschienenendabschnitten 7I. Die Ebene, in der die beiden Sammelschienenendabschnitte 6I und 7I sowie die Kuppelleitungen 9 und die abgewinkelten Leitungsstücke 102 angeordnet sind, liegt parallel zu der Ebene, in der sich die 3 Phasen des Kuppelschalters und die abgewinkelten Leitungsstücke 101 befinden. Senkrecht zu diesen beiden Ebenen verlaufen in der Höhe gestaffelt jeweils die 3 Phasen des ersten Trennschalters 2 und des zweiten Trennschalters 4 in verschiedenen Höhen.

Die zweiten Sammelschienenendabschnitte 7I durchstoßen in Durchführungen 13 eine weitere vertikale Schottwand 14a und führen als phasenweise Sammelschienen 15a,15b,15c in das nächste Abgangsfeld AF und in weitere Teile des zweiten Sammelschienenabschnittes der Schaltanlage.

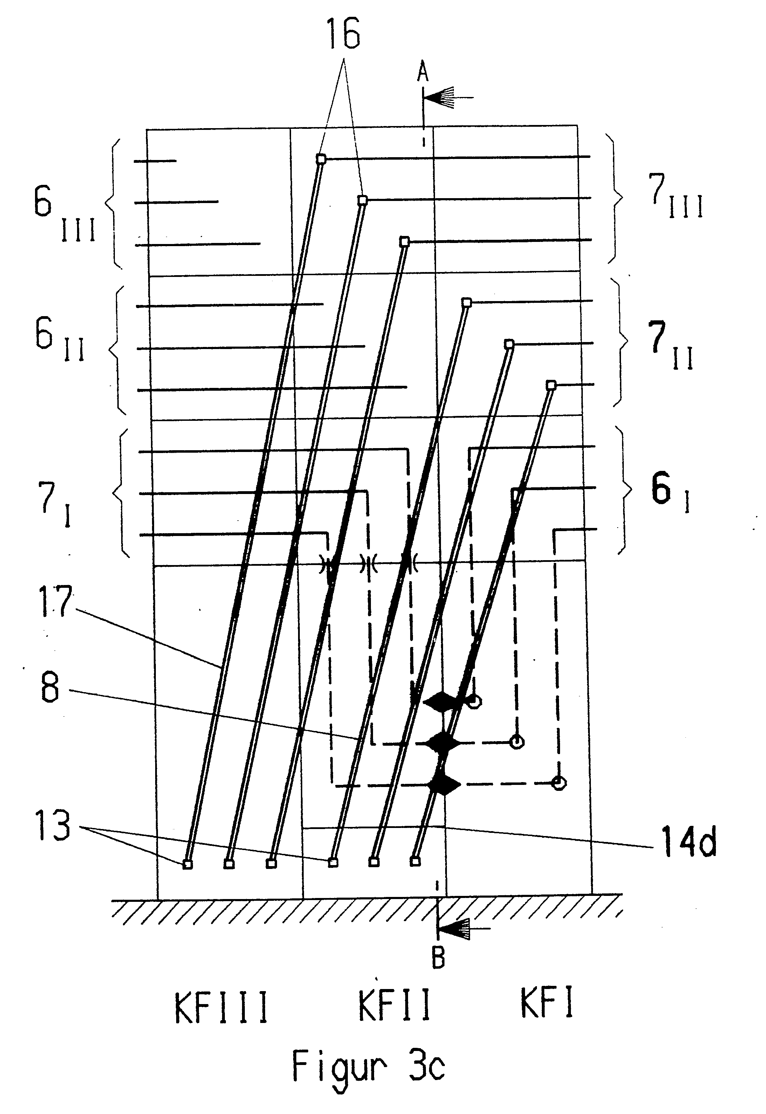

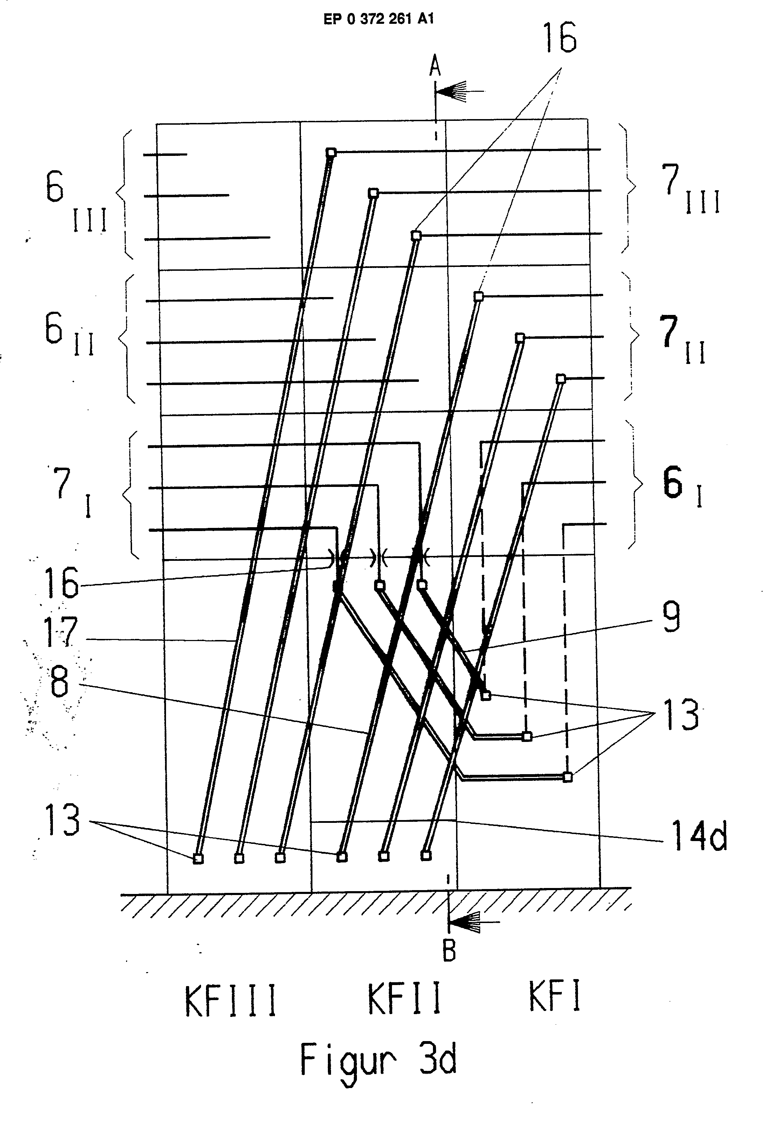

Bei der Schaltanlage nach den Figuren 3a, 3b, 3c verläuft die rückseitige Abdeckung 12 vertikal bis zur Bodenfläche der Schaltanlage und schließt die Kuppelleitungen 9 des Systems I mit ein. Die Abdeckung könnte aber auch so gekröpft sein, daß die Kuppelleitungen 9 ebenfalls außerhalb der Abdeckungen geführt sind. Dann ergibt sich nach Figur 3d eine Rückansicht mit gekreuzten Kuppelleitungen 8 und 9 in verschiedenen Ebenen. Innerhalb der Kuppelfelder KFI und KFII verlaufen dann nur noch systemeigene Leitungsstücke 10 vom jeweiligen zweiten Trennschalter 4 zu den Durchführungen 13 in der Rückwand, die horizontale Schottwand 14d im Kuppelfeld KFII kann entfallen. In dem Kuppelfeld KFI sind, bezogen auf Figur 3a, die Anschlüsse des zweiten Trennschalters 4 geradlinig zur Durchführung 13 geführt, die gemäß Figur 3d ebenfalls in der Rückwand befestigt sind. Es ergibt sich dadurch ohne Nachteile eine niedrigere Bauhöhe der Kuppelfelder. Die Leitungsführung der Systeme II und gegebenenfalls III stimmt dabei mit der aus den Figuren 3a und 3c überein.

Aus den bisherigen Erläuterungen ist erkennbar, daß die Problematik der gekreuzten Kuppelleitungen nur zwischen den Systemen I und II besteht, während sich das System III grundsätzlich immer mit ungekreuzten Kuppelleitungen 17 anschließen läßt. Dies ist aus allen bisher besprochenen Figuren gut erkennbar. Aus diesem Grund werden die noch folgenden Ausführungsbeispiele auf Längskupplungen bei den häufiger vorkommenden Doppelsammelschienensystemen beschränkt.

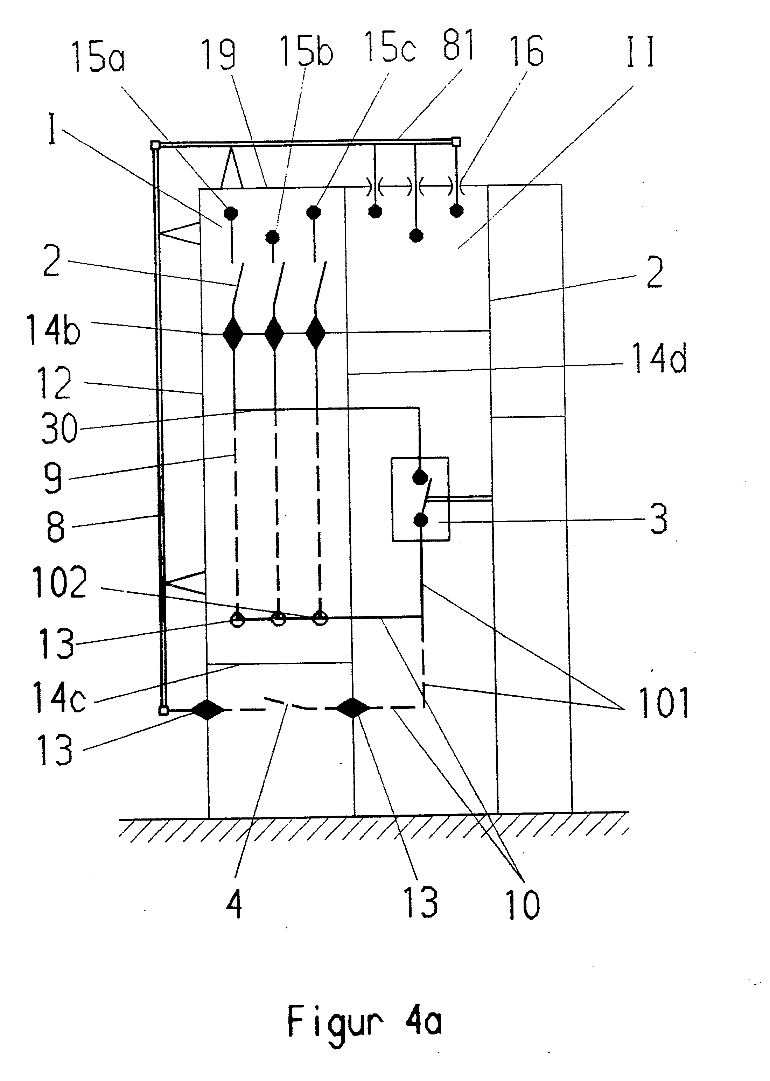

In den Figuren 4a bis 4e ist die Längskupplung für ein Doppelsammelschienensystem bei geringer Bauhöhe dargestellt, bei dem die Systeme I und II oberhalb des Schalterraums nebeneinander angeordnet sind. Damit die Tiefe der Schaltanlage dabei nicht zu groß wird, sind hier die Sammelschienen 15a, 15b, 15c vorteilhafterweise in Dreieckform eingebaut, wobei die Achsen der beiden Schienen 15a und 15c in einer zur oberen Abdeckung parallelen Ebene verlaufen (Figur 4a). Von den Sammelschienenräumen mit den ersten Trennschaltern 2 führen abgewinkelte Zuleitungen 30 zu dem jeweiligen Kuppelschalter 3.

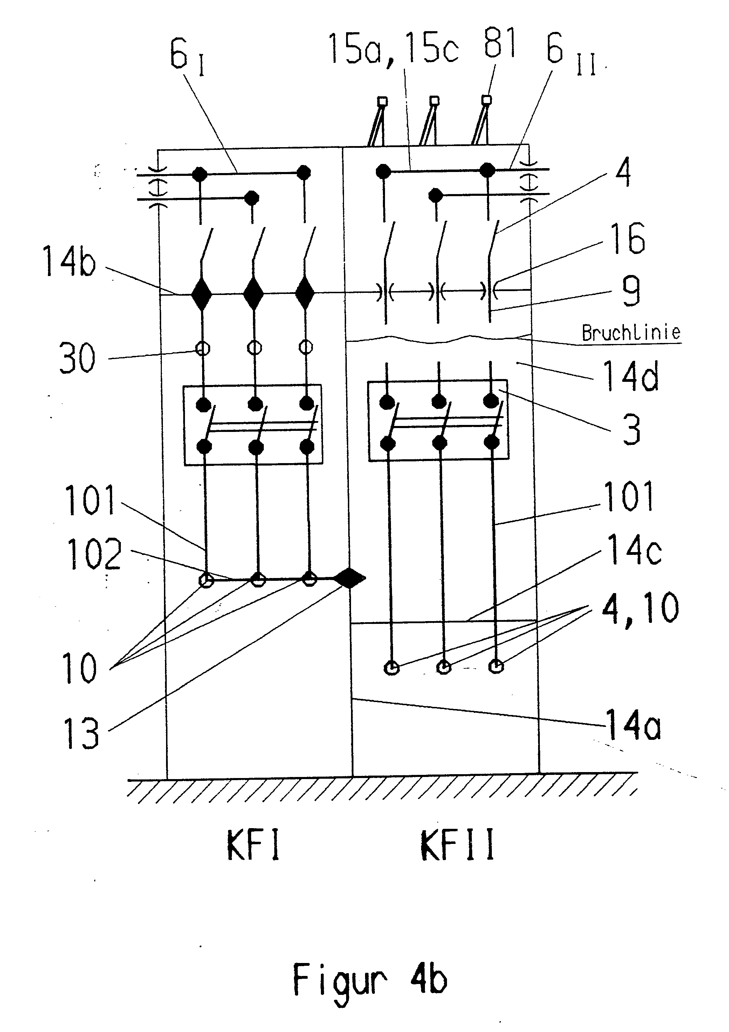

Im Kuppelfeld KFI schließen sich an die unteren Anschlüsse des Kuppelschalters 3 die Leitungsstücke 10 mit den abgewinkelten Abschnitten 101 und 102 an, die zu den in einer horizontalen Ebene angeordneten Durchführungen 13 in der vertikalen Schottwand 14a zwischen den beiden Kuppelfeldern KFI und KFII führen. Im Kuppelfeld KFII folgen abgewinkelten Kuppelleitungen 9, die in drei im Abstand der Mittellinien der Sammelschienen voneinander entfernten parallelen Ebenen zu den Anschlußstellen 16 der zweiten Endabschnitte 7I führen. Die zweiten Trennschalter 4 des Systems I befinden sich innerhalb des Sammelschienenschottraums der Endabschnitte 7I. In Figur 4b ist der Sammelschienenraum offen dargestellt, so daß der Trennschalter 4 sichtbar wird.

Im Kuppelfeld KFII führen die horizontalen Leitungsstücke 10 mit den abgewinkelten Abschnitten 101 vom Kuppelschalter 3 über in der vertikalen Schottwand 14d angeordnete Durchführungen 13 phasenweise zu dem zweiten Trennschalter 4 des Systems II und von dort zu den in der rückseitigen Abdeckung 12 befindlichen Durchführungen 13.

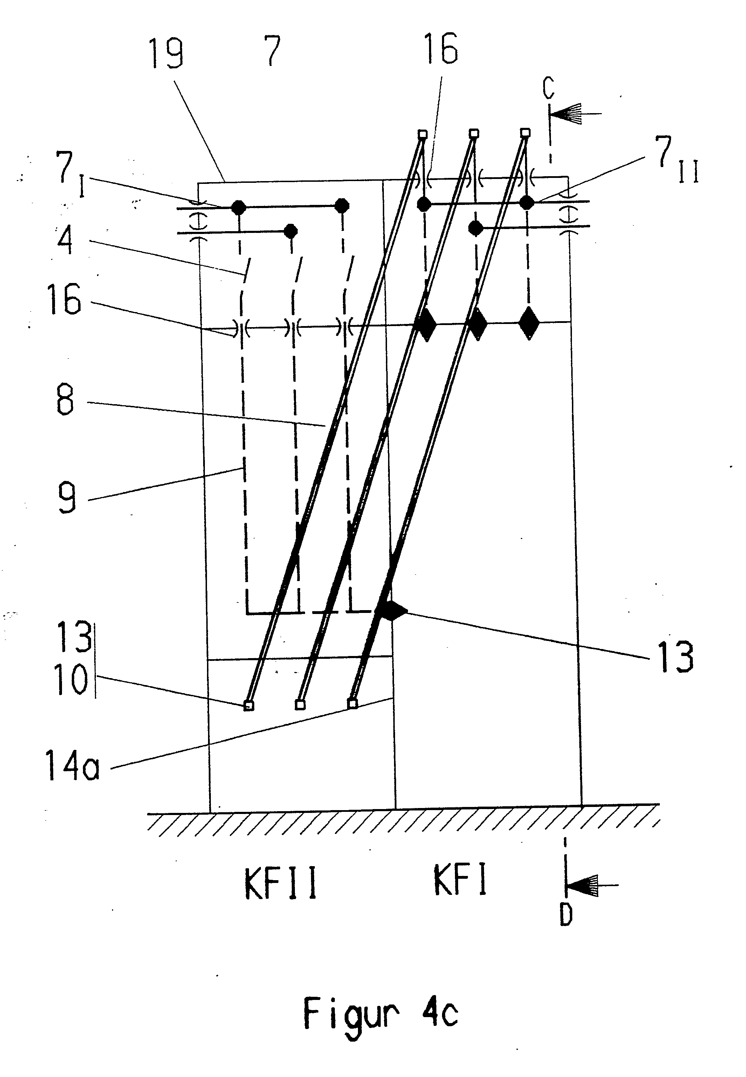

Im Kuppelfeld KFII ist außer der vertikalen auch noch eine horizontale Schottwand 14c zur Schottung der Systeme I und II erforderlich, während der Schalterraum des Kuppelfeldes KFI innerlich ungeschottet bleibt. Von den Durchführungen 13 sind die Kuppelleitungen 8 auf der Rückseite schräg nach oben (Figur 4c) zu dem Feld KFI und als horizontale Abschnitte 81 parallel zur oberen Abdeckung 19 bis zu den Anschlußstellen 16 der zweiten Sammelschienenabschnitte 7II verlegt.

In Figur 4b sind in KFII die Leitungen unterhalb der Anschlußstellen 16 abgebrochen, um den Kuppelschalter 3 und den zweiten Trennschalter 4 des Systems II mit dessen Leitungsstücken 10 darstellen zu können. Die Leitungsstücke 10 der Systeme I und II kreuzen sich dabei im Kuppelfeld KF$_{II}$ unter gegenseitiger Abschottung.

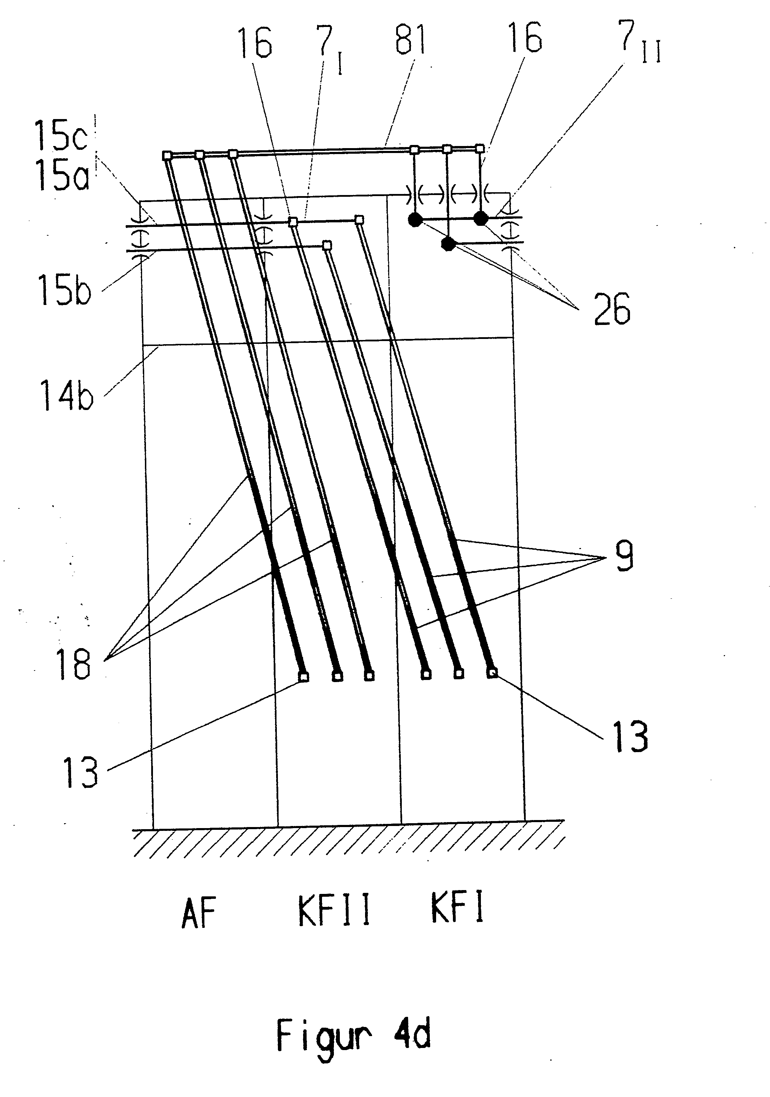

Läßt der gekapselte Schalterraum des Kuppelfeldes KFII eine Leitungsführung nach den Figuren 4a und 4b mit im Inneren der Schaltanlage gekreuzten Kuppelleitungen und der erforderlichen Schottung nicht zu, so kann auch hier ähnlich wie bei den Figuren 2a und 2b eine kreuzungsfreie Führung sämticher Kuppelleitungen auf der Rückseite der Schaltanlage vorgesehen werden. Innerhalb der beiden Kuppelfelder KFI und KFII sind dabei die zweiten Trennschalter 4 über die abgewinkelten Abschnitte 101 und die Leitungsstücke 10 mit dem Kuppelschalter 3 und den Durchführungen 13 in der rückseitigen Abdeckung 12, ähnlich wie in Figur 4a für das System II dargestellt, verbunden. Die Kuppelleitungen 9 des Systems I laufen dann gemäß Figur 4d von den Durchführungen 13 im Feld KFI unten schräg nach oben zu den im Feld KFII liegenden Anschlußstellen 16 der zweiten Sammelschienenendabschnitte 7I. Diese Anschlußstellen 16 liegen gestaffelt in den Ebenen der Sammelschienen 15a, 15c bzw. 15b des Systems I auf der rückseitigen Abdeckung 12 der Schaltanlage.

Die Sammelschienenendabschnitte 7I enden jeweils an den Verbindungsstellen 26 der einzelnen Phasen.

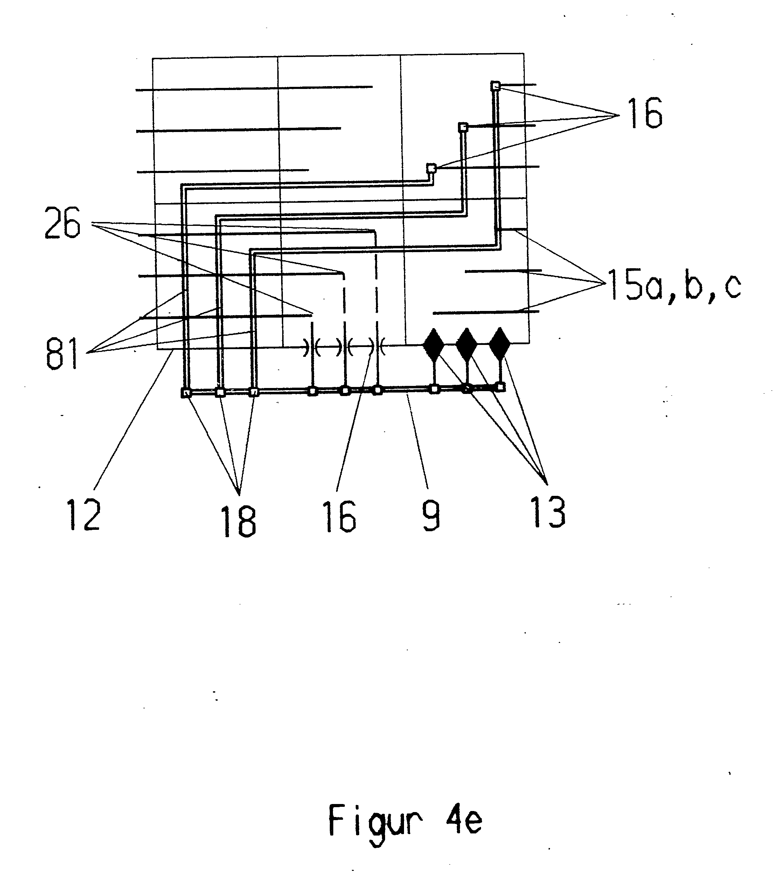

Von den unteren Durchführungen 13 im Feld KFII des Systems II führen geradlinige Kuppelleitungen 18 nach oben, an die sich nach Figur 4e abgewinkelte horizontale Abschnitte 81 anschließen, die über die Anschlußstellen 16 in der oberen Abdeckung 19 des Kuppelfeldes KFI zu den zweiten Sammelschienenendabschnitten 7II führen.

Um die Tiefe der Schaltanlage auch in diesem Fall so gering wie möglich zu halten, kreuzen die Kuppelleitungen 18 nicht die Kuppelleitungen 9, sondern verlaufen gemäß Figur 4d und 4e auf der Rückseite des benachbarten Abgangs-oder Einspeisefeldes AF in derselben parallel zur rückseitigen Abdeckung 12 liegenden Ebene um die Anschlußstellen 16 des Systems I herum. Die Kuppelleitungen 18 sowie die Abschnitte 81 auf der Oberseite der Schaltanlage sind dabei lediglich zur mechanischen Halterung mit den Abdeckungen 12 und 19 verbunden, so daß der gesamte Innenausbau des Abgangsfeldes AF unberührt bleibt.

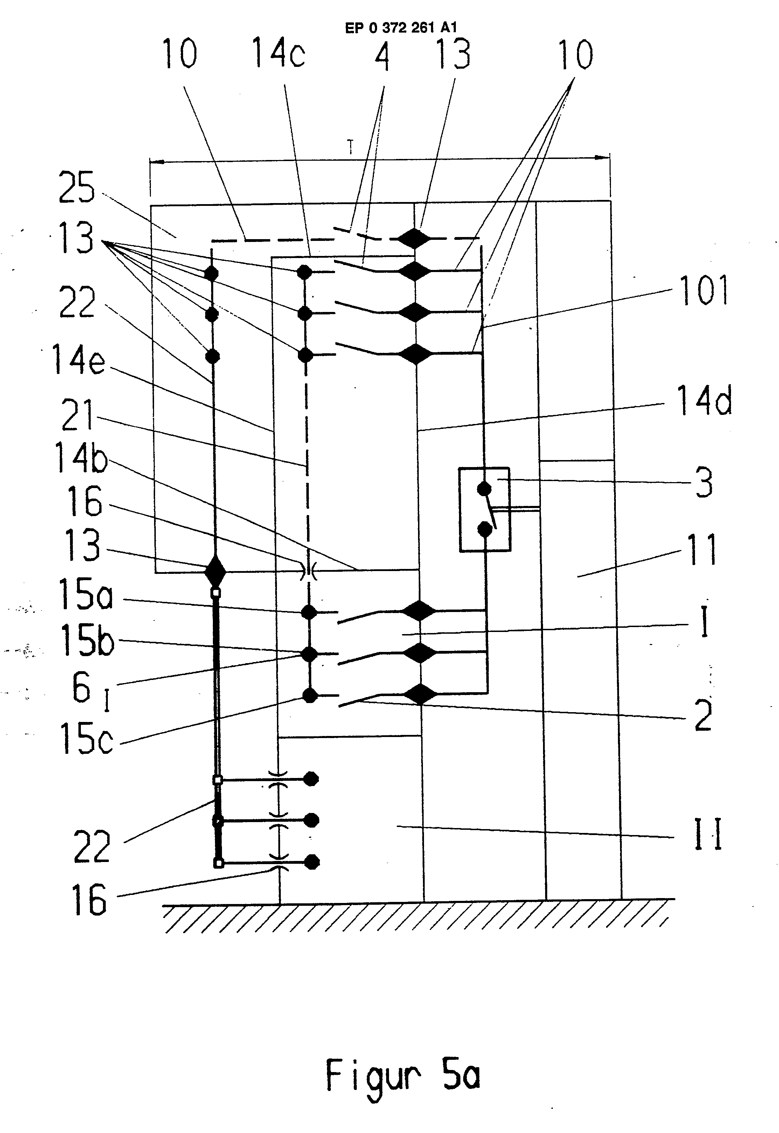

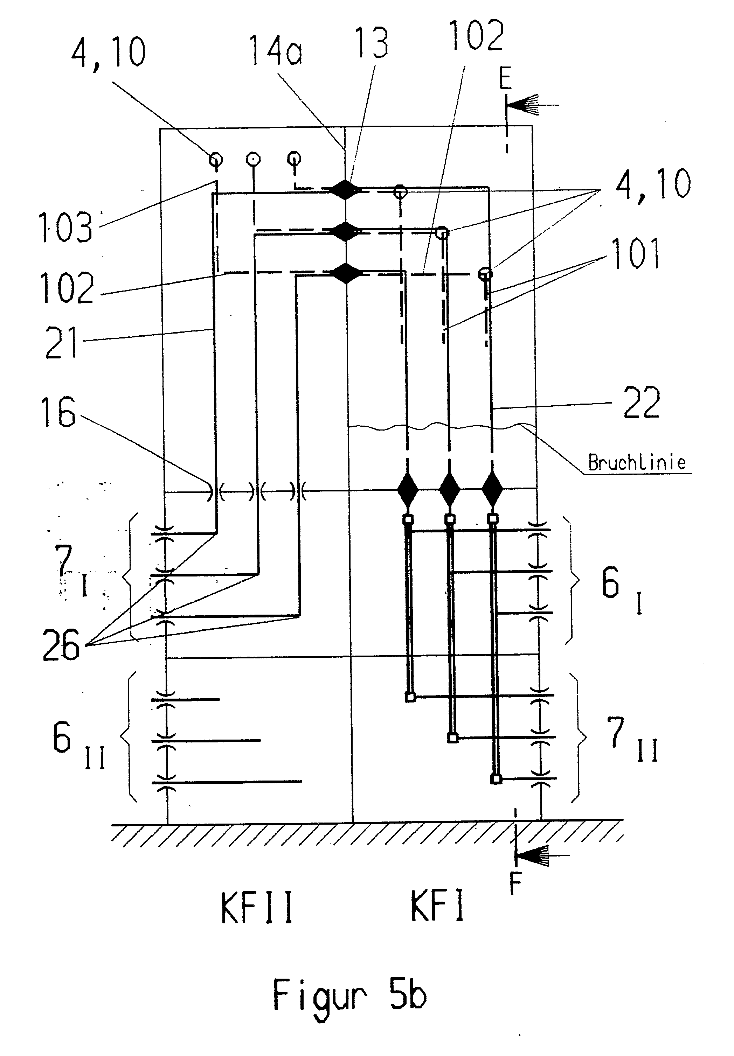

Die Erfindung läßt sich auch sehr vorteilhaft für Schaltenlagen mit untenliegenden Sammelschienen und oben angeordneten Kabelanschlüssen nach Figur 5a und 5b einsetzen. Solche Schaltanlagen haben in der Regel einen Anschlußraum 25 oberhalb des Schalterraums und der Sammel schienenräumen, dessen Tiefe T die der darunter liegenden Räume überragt. In den Kuppelfeldern läßt sich diese große Tiefe zur Unterbringung des größten Teiles der Kuppelleitungen einschließlich des Übergangs in das benachbarte Feld nutzen, so daß nur unterhalb der Stelle, an der in einem Abgangsfeld die Kabelanschlüsse liegen, außerhalb der Kapselung Teile der Kuppelleitungen vorzusehen sind, die das Außenprofil des Schaltenlagenquerschnitts aber nicht überragen. Nach Figur 5a ist das Kuppelfeld KFI des oberen Systems I dem Kuppelschalter 3 am nächsten gelegen. Die Gerätebestückung der beiden Kuppelfelder und ein Teil der Verbindung ist bei vertauschter Ober- und Unterseite, wie in Figur 3a angegeben, ausgeführt und für dieselben Bauteile mit denselben Bezugszeichen versehen.

So ist nach der Figure 5a die gesamte Leitungsführung von den ersten zu den zweiten Sammelschienenendabschnitten 6I-7I des ersten Systems I unter Anwendung einer Kuppelleitung 21 identisch der in den Figuren 3a und 3b dargestellten. In der Figur 5b ist das Kuppelfeld KFI im unteren Teil als Rückansicht und oberhalb der Bruchlinie bei geöffneter Rückwand dargestellt, während das Kuppelfeld II durchgehend ohne Rückwand gezeigt ist. Zum besseren Verständnis sind in Figur 5b die Leitungsstücke 10 sowie die Abschnitte 101 und 102 des Systems I im Kuppelfeld KFI gestrichelt gezeichnet. Im Kuppelfeld KFII findet das System I seine Fortsetzung durch die Kuppelleitungen 21, die phasenweise zu den Anschlußstellen 16 geführt sind. Die zweiten Endabschnitte 7I enden ähnlich wie bei der Anordnung nach Figur 3c an den Verbindungsstellen 26. Der gesamte Leitungszug von den Durchführungen 13 bis zu den Endabschnitten 7I liegt nach Figur 5a vorteilhaft in der durch die Achsen der letzteren gelegten Ebene.

Im Kuppelfeld KFII führt die Verbindung vom zweiten Trennschalter 4 über Leitungsstücke 10 und zweimal abgewinkelte Abschnitte 102 und 103 zu den Durchführungen 13 in der vertikalen Schottwand 14a und von dort im Kuppelfeld KFI als innen liegender Abschnitt der Kuppelleitung 22 zu den Durchführungen 13 am unteren Ende des Anschlußraumes 25. Diese Leitungsführung ist in Figur 5b gestrichelt angegeben. Die Kuppelleitungen 22 verbinden die Durchführungen 13 außerhalb der Kapselung mit den Anschlußstellen 16 der zweiten Sammelschienenendabschnitte 7II.Schottwände 14c und 14e schotten die Kuppelleitungen und Leitungsstücke der beiden Systeme I und II innerhalb der Anschlußräume 25 der beiden Kuppelfelder KFI und KFII gegeneinander ab.

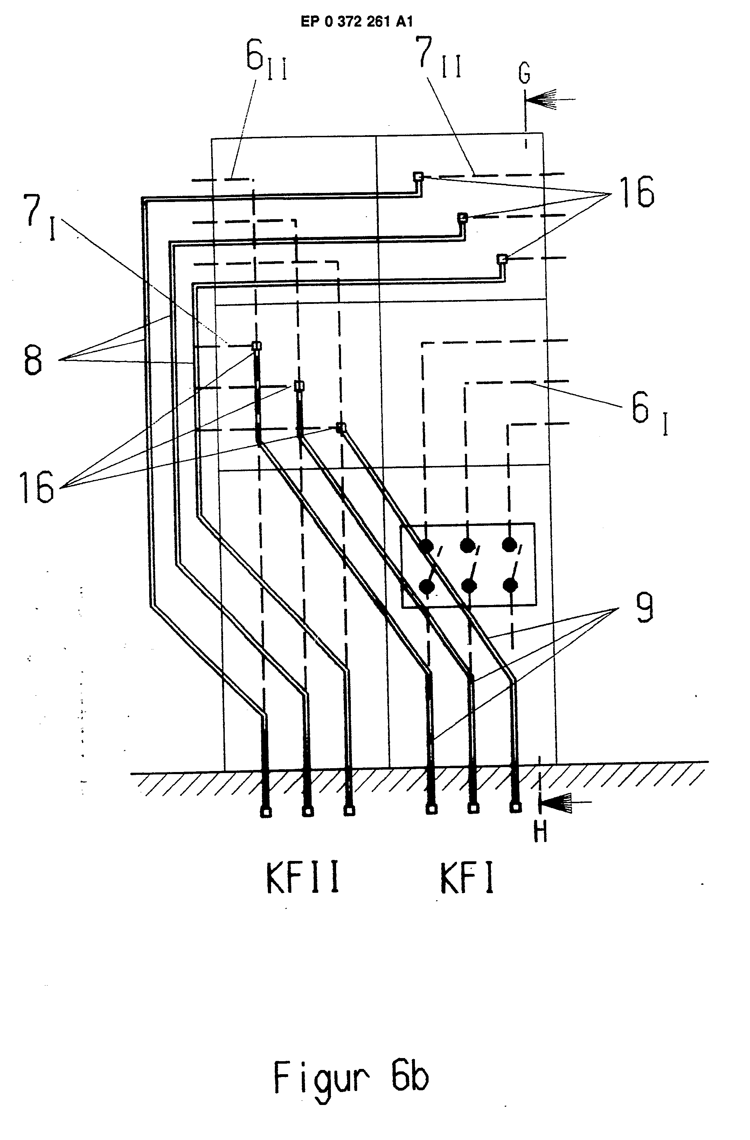

Bei Schaltanlagen geringer Bauhöhe mit einem kleinen Schalter- und Anschlußraum ist es nicht immer möglich, den zweiten Trennschalter 4 im Schalterraum zwischen dem Kuppelschalter 3 und den Kuppelleitungen 8 bzw. 9 anzuordnen. Die Erfindung läßt sich auch in solchen Fällen anwenden, in dem man den zweiten Trennschalter 4 in an sich bekannter Weise mit im Sammelschienenraum der zweiten Endabschnitte 7I, 7II, 7III unterbringt. Dies kann für die zweiten Endabschnitte 7I, 7II gemäß Figuren 6a und 6b vorteilhaft durch den Einbau eines Sammelschienenraums mit dem Trennschalter 2 nach Drehung desselben um 180° erfolgen. Die Sammelschienen 15a, 15b, 15c fluchten dabei mit denen in den anschließenden Abgangsfeldern und aus den eingebauten Trennschaltern werden zweite Trennschalter 4 im Zuge der Kupplung. (Siehe Figur 6a, System II). Die Leitungsstücke 10 können als weitere Alternative in beiden Kuppelfeldern KFI und KFII nach unten zur Durchführung 13 oder anderen Anschlußmitteln führen, die an Stelle der Kabelendverschlüsse in einem Abgangsfeld AF angebracht sind. Von hier aus werden die Kuppelleitungen 28 und 29 im ersten Teil an der Unterseite der Schaltanlage horizontal nach hinten geführt und beim Übergang zur vertikalen Richtung abgewinkelt. Auf der Rückseite der Schaltanlage findet ähnlich wie bei der Figur 3c eine kreuzungsfreie Weiterführung der Kuppelleitungen 28, 29 bis zu den Anschlußstellen 16 der jeweiligen zweiten Trennschalter 4 und zu den zweiten Sammelschienenabschnitten 7I und 7II statt, wobei die Kuppelleitungen 28 des zweiten Systems über die Rückseite des benachbarten Abgangs-oder Einspeisefeldes geführt sind.

Es ist auch eine Ausführung der Kuppelfelder KFI, KFII ähnlich Figur 2a und 2b mit nach hinten geführten, abgewinkelten Leitungsstücken 10 denkbar, bei denen die Durchführungen 13 in der rückseitigen Abdeckung 12 angebracht sind.

Bei Schaltanlagen, bei denen in der Längskupplung der zweite Trennschalter 4 mit dem zweiten Sammelschienenendabschnitt 7I, 7II, 7III zusammen in den Sammelschienenräumen eingebaut ist, können wegen der Größe dieser Geräte und wegen deren Antrieb von der Frontseite der Schaltanlage die Anschlußstellen 16 nicht an der Unterseite des Sammelschienenraums des Systems I und die Kuppelleitungen 9 nicht in einer vertikalen Ebene wie beispielsweise in Figur 3a vorgesehen werden.

Bei den Schaltanlagen, bei denen die zweiten Trennschalter 4 mit in den Schotträumen der zweiten Sammelschienenendabschnitte 7I, 7II, 7III untergebracht sind, ergibt sich auch bei hoher Versorgungssicherheit der Verbraucher durch bestmögliche Verhinderung der Ausbreitung von Lichtbogenstörungen keine Notwendigkeit innerhalb der Kuppelfelder zusätzliche Schottungen vorzusehen.

Der Zwang zur Vereinheitlichung der Gehäuse der einzelnen Schaltfelder kann auch bei anderen Bauformen, z.B. nach den Figuren 2a, 2b, 3a bis 3c und 4a bis 4e dazu zwingen, die Durchführungen 13 in der Kabelraumabdeckung 27 anzubringen und die Kuppelleitungen (28,29) von dort horizontal bis zur Schaltanlagenrückseite zu führen. Diese Ausführungen sind nicht gesondert dargestellt, da sie der in den Figuren 6a bis 6b gezeigten entsprechen.

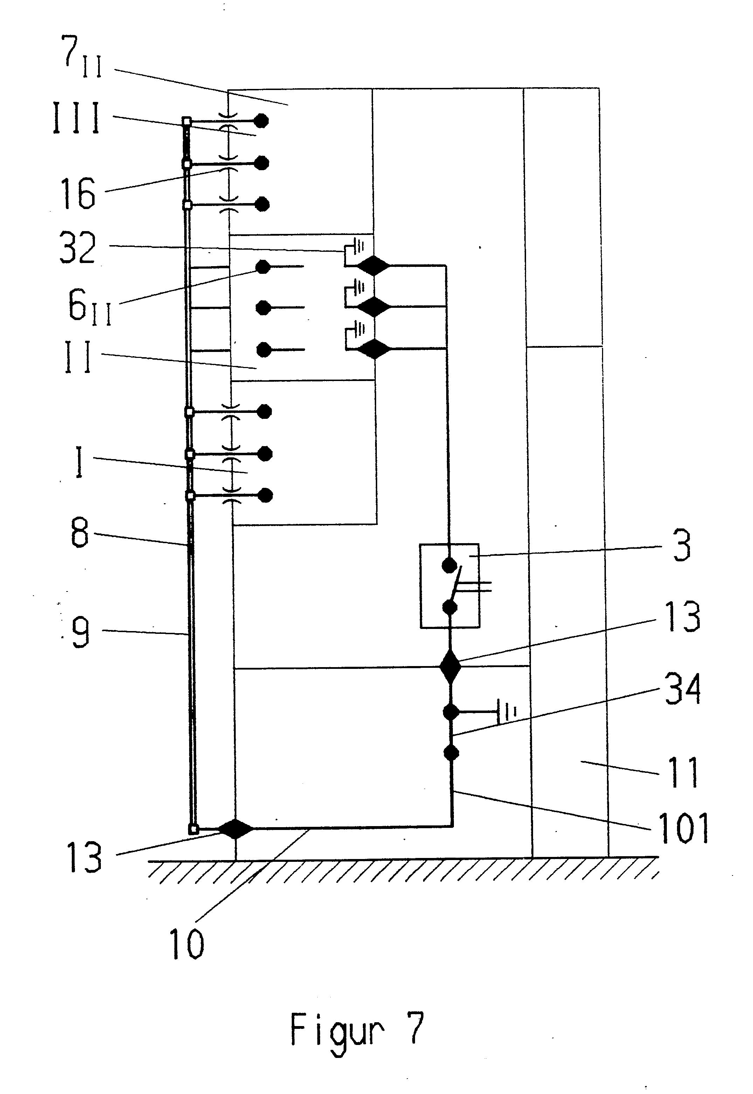

In der der Figur 2a analogen Schritt AB zur Figur 2b durch das Kuppelfeld KFII ist in Figur 7 anstelle des ersten und zweiten Trennschalters ein erster Dreistellungsschalter 32 im Kuppelfeld KFII, System II, im Sammelschienenraum der Endabschnitte 6II und unterhalb des Kuppelschalters 3 ein zweiter Dreistellungsschalter 34 angegeben. Die Leitungsführung entspricht der Figur 2a. Der Schalter 32 ist in Erdungsstellung und der Schalter 34 in eingeschalteter Stellung gezeigt. Bei einer nun folgenden Zuschaltung des Kuppelschalters 3 würde der sich an die Endabschnitte 7II anschließende Sammelschienenteil des Systems II geerdet werden. Verriegelungen verhindern dabei bekannterweise eine Zuschaltung vor Abtrennung der Einspeisungen in diesem Systemteil.

Die in den Figuren 1 bis 7 gezeigten Ausführungen stellen die wichtigsten Anwendungsbeispiele des prinzipiellen Erfindungsgedankens dar, aber nicht die einzigen. Es sind durchaus noch weitere vorteilhafte Kombinationen in der Anordnung der Kuppelleitungen und der Gerätebestückung ausführbar.

Als Kuppelschalter können vorzugsweise die Leistungsschalter vorgesehen werden, die in den Abgangs- bzw. Einspeisefeldern des Schaltanlagensystems vorgesehen sind. Die Erfindungsidee ist aber auch für solche Schaltanlagen einsetzbar, bei denen eine Längstrennung mit je einem Lastschalter pro System vorgesehen werden soll. Außerdem können bei den erfindungsgemäßen Längskupplungen in den Kuppelfeldern für die einzelnen System auch Strom- und Spannungswandler eingebaut

werden.

Liste der Bezugzeichen:

Abgangsfeld     AF
Kuppelfeld für das I.,II.oder III.System KFI,KFII,KFIII
Leitungsschalter     1
erster Trennschalter     2
Kuppelschalter     3
zweiter Trennschalter     4
Kabelanschluß     5
erster Sammelschienenendabschnitt des Systems I,II,III     6I,6II,6III
zweiter Sammelschienenendabschnitt des Systems I,II,III     7I,7II,7III
Kuppelleitung des Systems II     8
horizontaler Abschnitt     81
Kuppelleitung des Systems I     9
Leitungsstück     10
abgewickelter Abschnitt     101,102,103
Antriebs- und Steuerschrank     11
Rückseitige Abdeckung     12
Durchführung     13
Schottwand     14a,14b,14c,14d,14e
Sammelschienen     15a,15b,15c
Anschlußstelle     16
Kuppelleitung des Systems III     17
kreuzungsfreie Kuppelleitung als System II. 18
obere Abdeckung     19
Kuppelleitung des Systems I     21
Kuppelleitung des Systems II     22
Leitungsstück     23
zweiter Trennschalter     24
oben liegender Anschlußraum     25
Verbindungsstelle     26
Kabelraumabdeckung     27
Kuppelleitung des Systems II     28
Kuppelleitung des Systems I     29
Zuleitung     30
erster Dreistellungsschalter     32
zweiter Dreistellungsschalter     34

**Ansprüche**

1. Längskupplung für Sammelschienen von in gekapselten Schaltanlagen eingebauten, mehrphasigen, durch Schottwände voneinander getrennten Mehrfachsammelschienensystemen, bei denen

a) die Achsen von wenigstens zwei Sammelschienen (15a, 15c) eines Systems in einer zur nächstliegenden Abdeckung (12,19) zumindest annähernd parallelen Ebene angeordnet sind,

b) die zu kuppelnden Abschnitte jeder Sammelschiene mit einem ersten und einem zweiten Endabschnitt (6I, 7I, 6II, 7II, 6III, 7III) in verschiedenen Schaltfeldern angeordnet sind, wobei jeweils der erste Endabschnitt (6I, 6II, 6III) mit einem ersten Trennschalter (2) und einem Kuppelschalter (3) in dem als Kuppelfeld (KFI, KfII, KFIII) des Systems bezeichneten Schaltfeld untergebracht ist,

c) zwischen dem Kuppelschalter (3) und einer Verbindungsstelle (26) am zweiten Sammelschienenendabschnitt (7I, 7II, 7III) ein zweiter Trennschalter (4) und Kuppelleitungen (8, 9, 17,18,21,22,28,29,81) vorgesehen sind, wobei letztere mit einer isoliert durch eine den jeweiligen Sammelschienenendabschnitt (7I, 7II, 7III) umhüllende Schottwand (14b) oder Abdeckung (12, 19) durchgeführten Anschlußstelle (16) verbunden sind, und

d) die Pole des Kuppelschalters (3) bezogen auf die Schaltanlagenfrontseite nebeneinander geradlinig oder geringfügig versetzt angeordnet sind, **gekennzeichnet** durch folgende Merkmale:
a) die zweiten Sammelschienenendabschnitte (7I, 7II, 7III) eines jeden Systems (I, II, III) sind in dem / bzw. in einem benachbarten Kuppelfeld (KFI, KFII) eines anderen Systems untergebracht,
b) die Kuppelleitungen (8,9,17,18,21,22,28,29,81) sind innerhalb und/oder außerhalb der Kapselung der Schaltanlage angeordnet, und
c) die außerhalb der Abdeckungen (12, 19) angeordneten Kuppelleitungen (8,9,17,18,22,28,29,81) sind kreuzungsfrei in einer zur benachbarten, die Höhe bzw. die Tiefe der Schaltanlage bestimmenden Abdeckung parallelen Ebene geführt.

2. Längskupplung für Sammelschienen nach Anspruch 1, **gekennzeichnet** durch folgende Merkmale für jedes der Systeme (I,II,III):

a) In den Kuppelfeldern (KFI, KFII, KFIII) sind jeweils der erste Trennschalter (2), der Kuppelschalter (3) und der zweite Trennschalter (4) vor der durch die Achsen der beiden zur rückseitigen Abdeckung (12) wenigstens annähernd parallelen Sammelschienen (15a, 15c) des Systems (I) bestimmten Ebene angeordnet,

b) in den zu den Kuppelfeldern (KFI, KFII, KFIII) benachbarten Kuppelfeldern durchdringen die mit den Verbindungsstellen (26) verbundenen Anschlußstellen (16) die rückseitige Abdeckung (12) und

c) die Kuppelleitungen (8,9, 17) der Systeme (I,II,III) verlaufen von den Anschlußstellen (16) parallel zur rückseitigen Abdeckung (12) zu Durchführungen (13) und über im Inneren der Kuppelfelder (KFI,KFII,KFIII) verlegte Leitungsstücke (10,101) zu den Anschlüssen des zweiten Trennschalters (4).

3. Längskupplung für Sammelschienen nach Anspruch 1, **gekennzeichnet** durch folgende Merkmale:

a) In den Kuppelfeldern (KFI, KFII, KFIII) aller Systeme (I,II,III) sind jeweils der erste Trennschalter (2), der Kuppelschalter (3) und der zweite Trennschalter (4) vor der durch die Achsen der beiden zur rückseitigen Abdeckung (12) wenigstens annähernd parallelen Sammelschienen (15a, 15c) des Systems (I) bestimmten Ebene angeordnet,

b) in dem zum Kuppelfeld (KFI) des ersten Systems (I) benachbarten Kuppelfeld (KFII) durchdringen die mit den Verbindungsstellen (26) verbundenen Anschlußstellen (16) in der genannten oder einer im geringen Abstand zu dieser parallel liegenden Ebene die Schottwand (14b), wobei die zweiten Endabschnitte (7I) phasenweise an ihren Verbindungsstellen (26) in einem hochspannungstechnisch ausreichenden Abstand zur Anschlußstelle (16) der jeweiligen Nachbarphase enden.

c) die Kuppelleitungen (9,21) des ersten Systems (I) verlaufen innerhalb der Kapselung der Schaltanlage von den Anschlußstellen (16) in einer gemeinsamen vertikalen Ebene aus dem benachbarten (KFII) über in der vertikalen Schottwand (14a) angeordnete Durchführungen (13) in das systemeigene Kuppelfeld (KFI) und mittels abgewinkelter Leistungsstücke (10,101) zu den Anschlüssen des zweiten Trennschalters (4),

d) in den zu den Kuppelfeldern des zweiten und gegebenenfalls dritten Systems (II,III) benachbarten Kuppelfeldern durchdringen die mit den Verbindungsstellen (26) verbundenen Anschlußstellen (16) die rückseitige Abdeckung (12),

e) die Kuppelleitungen (8,17) des zweiten und gegebenenfalls des dritten Systems (II,III) verlaufen von den Anschlußstellen (16) parallel zur rückseitigen Abdeckung (12) zu Durchführungen (13) und über im Inneren der Kuppelfelder (KFII, KFIII) verlegte Leitungsstücke (10,101) zu den Anschlüssen des zweiten Trennschalters (4), und

f) die Kuppelleitungen (9,21) des ersten Systems (I) sind gegen die Leitungsstücke (10) des zweiten Systems (II) im Kuppelfeld (KFII) durch eine Schottwand (14d) getrennt.

4. Längskupplung für Sammelschienen nach Anspruch 1, **gekennzeichnet** durch folgende Merkmale:

a) In den Kuppelfeldern (KFI,KFII,KFIII) aller Systeme (I,II,III) sind jeweils der erste Trennschalter (2), der Kuppelschalter (3) und der zweite Trennschalter (4) vor der durch die Achsen der beiden zur rückseitigen Abdeckung (12) wenigstens annähernd parallelen Sammelschienen (15a, 15c) des Systems (1) bestimmten Ebene angeordnet,

b) in dem zum Kuppelfeld (KFI) des ersten Systems (I) benachbarien Kuppelfeld (KFII) durchdringen die mit den verbindungsstellen (26) verbundenen Anschlußstellen (16) in der genannten oder einer im geringen Abstand zu dieser parallel liegenden Ebene die untere Abdeckung des Sammelschienenraums, wobei die zweiten Endabschnitte (7I) phasenweise an ihren Verbindungsstellen (26) in einem hochspannungstechnisch ausreichenden Abstand zur Anschlußstelle (16) der jeweiligen Nachbarphase enden,

c) in den zu den Kuppelfeldern des zweiten und gegebenenfalls dritten Systems (II,III) benachbarten Kuppelfeldern durchdringen die mit den Verbindungsstellen (26) verbundenen Anschlußstellen (16) die rückseitige Abdeckung (12) der Sammelschienenräume,

d) die Kuppelleitungen (8,9,17) der einzelnen Systeme (I,II,III) verlaufen von den Anschlußstellen (16) parallel zur benachbarten rückseitigen Abdeckung (12) zu Durchführungen (13) und über im Inneren der Kuppelfelder (KFI,KFII,KFIII) verlegte Leitungsstücke (10,101) zu den Anschlüssen des zweiten Trennschalters (4), und

e) die Kuppelleitungen (9,21) des ersten Systems (I) sind gegen die Leitungsstücke (10) des zweiten Systems (II) im Kuppelfeld (KFII) durch eine Schottwand (14d) getrennt.

5. Längskupplung für Sammelschienen nach Anspruch 1, **gekennzeichnet** durch folgende Merkmale:

a) In den Kuppelfeldern (KFI,KFII,KFIII) aller Systeme (I,II,III) sind jeweils der erste Trennschalter (2), der Kuppelschalter (3) und der zweite Trennschalter (4) unter der durch die Achsen der beiden zur oberen Abdeckung (19) wenigstens annähernd parallelen Sammelschienen (15a, 15c) des Systems (I) bestimmten Ebene angeordnet,

b) in dem zum Kuppelfeld (KFI) des ersten Systems (I) benachbarten Kuppelfeld (KFII) ist der zweite Trennschalter (4) zwischen den Verbindungsstellen (26) und den Anschlußstellen (16), die die horizontale Schottwand (14b) in vertikaler Richtung durchdringen, angeordnet.

c) die Kuppelleitungen (9,21) des ersten Systems (I) verlaufen innerhalb der Kapselung der Schaltanlage von den Anschlußstellen (16) aus dem benachbarten (KFII) über in der vertikalen Schottwand (14a) in einer horizontalen Ebene angeordnete Durchführungen (13) in das systemeigene Kuppelfeld (KFI) und über abgewinkelte Leitungsstücke (10,101) zu den Anschlüssen des Kuppelschalters 3,

d) in den zu den Kuppelfeldern des zweiten und gegebenenfalls dritten Systems (II,III) benachbarten Kuppelfeldern durchdringen die mit den Verbindungsstellen (26) verbundenen Anschlußstellen (16) die obere Abdeckung (19),

e) die Kuppelleitungen des zweiten und gegebenenfalls des dritten Systems (II,III) verlaufen von den Anschlußstellen (16) parallel zur jeweiligen Abdeckung (12,19) zu Durchführungen (13) und über im Inneren der Kuppelfelder (KFII,KFIII) verlegte Leitungsstücke (10,101) zu den Anschlüssen des zweiten Trennschalters (4) und

f) die Kuppelleitungen (9,21) des ersten Systems (I) sind gegen die Leitungsstücke (10) des zweiten Systems (II) im Kuppelfeld (KFII) durch eine Schottwand (14d) getrennt.

6. Längskupplung für Sammelschienen nach Anspruch 1, **gekennzeichnet** durch folgende Merkmale:

a) In den Kuppelfeldern (KFI,KFII,KFIII) aller Systeme (I,II,III) sind jeweils der erste Trennschalter (2), der Kuppelschalter (3) und der zweite Trennschalter (4) unter der durch die Achsen der beiden zur oberen Abdeckung (19) wenigstens annähernd parallelen Sammelschienen (15a, 15c) des Systems (I) bestimmten Ebene angeordnet,

b) in dem zum Kuppelfeld (KFI) des ersten Systems (I) benachbarten Kuppelfeld (KFII) durchdringen die mit den Verbindungsstellen (26) verbundenen Anschlußstellen (16) in der genannten oder einen im geringen Abstand zu dieser parallel liegenden Ebene die rückseitige Abdeckung (12), wobei die zweiten Endabschnitte (7I) phasenweise an ihren Verbindungsstellen (26) in einem hochspannungstechnisch ausreichenden Abstand zur Anschlußstelle (16) der jeweiligen Nachbarphase enden,

c) in den zu den Kuppelfeldern des zweiten und gegebenenfalls dritten Systems (II,III) benachbarten Kuppelfeldern durchdringen die mit den Verbindungsstellen (26) verbundenen Anschlußstellen (16) die obere Abdeckung (19) und

d) die Kuppelleitungen aller Systeme (I,II,III) verlaufen von den Anschlußstellen (16) parallel zur jeweils benachbarten Abdeckung (12,19) zu Durchführungen (13) und über im Inneren der Kuppelfelder (KFII,KFIII) verlegte Leitungsstücke (10,101) zu den Anschlüssen des zweiten Trennschalters (4).

7. Längskupplung für Sammelschienen nach Anspruch 1, **gekennzeichnet** durch folgende Merkmale:

a) In den Kuppelfeldern (KFI,KFII,KFIII) aller Systeme (I,II,III) sind jeweils der erste Trennschalter (2), der Kuppelschalter (3) und der zweite Trennschalter (4) vor der durch die Achsen der beiden zur rückseitigen Abdeckung (12) wenigstens annähernd parallelen Sammelschienen (15a, 15c) des Systems (I) bestimmten Ebene angeordnet,

b) in dem zum Kuppelfeld (KFI) des ersten Systems (I) benachbarten Kuppelfeld (KFII) durchdringen die mit den verbindungsstellen (26) verbundenen Anschlußstellen (16) in der genannten oder einer im geringen Abstand zu dieser parallel liegenden Ebene die Schottwand (14b), wobei die zweiten Endabschnitte (7I) phasenweise an ihren Verbindungsstellen (26) in einem hochspannungstechnisch ausreichenden Abstand zur Anschlußstelle (16) der jeweiligen Nachbarphase enden,

c) in den zu den Kuppelfeldern des zweiten und gegebenenfalls dritten Systems (II,III) benachbarten Kuppelfeldern (KFI,KFII) durchdringen die mit den verbindungsstellen (26) verbundenen Anschlußstellen (16) die rückseitige Abdeckung (12),

d) die Kuppelleitungen (21,22) aller Systeme (I,II,III) verlaufen innerhalb der oberhalb der Sammelschienenräume angeordneten Anschlußräume (25), wobei die Kuppelleitungen (22) des zweiten und gegebenenfalls des dritten Systems (II,III) zu an der Unterseite des Anschlußraumes (25) angeordneten Durchführungen (13) geführt sind,

e) die Kuppelleitungen (21) des ersten Systems (I) verlaufen von den Anschlußstellen (16) in einer gemeinsamen vertikalen Ebene aus dem benachbarten (KFII) über in der vertikalen Schottwand (14a) angeordnete Durchführungen (13) in das systemeigene Kuppelfeld (KFI) und mittels abgewinkelter Leitungsstücke (10, 102) zu den Anschlüssen des zweiten Trennschalters (4),

f) die inneren Abschnitte der Kuppelleitungen (22) des zweiten und gegebenenfalls des dritten Systems (II,III) verlaufen von den Durchführungen (13) in einer gemeinsamen vertikalen Ebene aus dem jeweils benachbarten Kuppelfeld (KFI,KFII) über in der vertikalen Schottwand (14a) angeordnete Durchführungen (13) in das sy stemeigene Kuppelfeld (KFII,KFIII) und mittels abgewinkelter Leitungsstücke (10,101,102,103) zu den Anschlüssen des zweiten Trennschalters (4),

g) die Kuppelleitungen (22) des zweiten und gegebenenfalls des dritten Systems (II,III) verbinden in ihrem außerhalb der Kapselung liegenden Teil die Anschlußstellen (16) mit den Durchführungen (13) im jeweiligen benachbarten Kuppelfeld (KFI,KFII) und

h) in jedem Kuppelfeld (KFI, KFII) sind die Kuppelleitungen (21,22) des einen Systems (I,II) gegen die Leitungsstücke (10) und deren abgewinkelte Abschnitte (101,102,103) des anderen Systems durch Schottungen (14c,14e) getrennt.

8. Längskupplung für Sammelschienen nach Anspruch 1, **gekennzeichnet** durch folgende Merkmale für jedes der Systeme (I,II,III)

a) In den Kuppelfeldern (KFI,KFII,KFIII) sind jeweils der erste Trennschalter (2) und der Kuppelschalter (3) vor der durch die Achsen der beiden zur rückseitigen Abdeckung (12) wenigstens annähernd parallelen Sammelschienen (15a, 15c) des Systems (I) bestimmten Ebene angeordnet,

b) in den Kuppelfeldern (KFI,KFII,KFIII) sind die zweiten Trennschalter (4) im jeweiligen Sammelschienenraum der zweiten Endabschnitte (7I,7II,7III) zwischen den Verbindungsstellen (26) und den die rückseitige Abdeckung (12) durchstoßenden Anschlußstelle (16) angeordnet,

c) die Kuppelleitungen (8,9,17,18,28,29) der einzelnen Systeme (I,II,III) verlaufen von den Anschlußstellen (16) parallel zur jeweils benachbarten Abdeckung (12) zu Durchführungen (13) und über im Inneren der Kuppelfelder (KFI,KFII,KFIII) verlegte Leitungsstücke (10,101,102) zu den Anschlüssen des Kuppelschalters (3).

9. Längskupplung für Sammelschienen nach einem der Ansprüche 2,3,4,5,6 oder 7, **dadurch gekennzeichnet,** daß der zweite Trennschalter (4) einer jeden Phase im horizontalen Leitungsstück (10) der Kuppelleitung (9,21) untergebracht ist.

10. Längskupplung für Sammelschienen nach einem der Ansprüche 2 bis 6 und 8 **dadurch gekennzeichnet,** daß die Durchführungen (13) im Gehäuse des Kuppelfeldes (KFI,KFII,KFIII) eines jeden Systems (I,II,III) bei außerhalb der Kapselung verlaufenden Kuppelleitungen (8,9,17,18) an der Stelle der in Abgangsfeldern (AF) eingebauten Kabelanschlüsse vorgesehen sind und die auf der Rückseite angebrachten Kuppelleitungen (8,9,17,18) durch unter der Kabelraumabdeckung (27) angeordnete Teile (28,29) bis zu den Durchführungen (13) verlängert sind.

11. Längskupplung für Sammelschienen nach einem der vorangegangenen Ansprüche, **dadurch gekennzeichnet,** daß die Verbindungsstellen (26) zwischen den zweiten Sammelschienenendabschnitten (7I,7II,7III) der einzelnen Phasen und den Anschlußstellen (16) der Kuppelleitungen (8,9,17,18,21,22,81) wie in einem Abgangsfeld angeordnet sind.

12. Längskupplung für Sammelschienen nach einem der Ansprüche 2, 3, 4, 5 oder 6, **dadurch gekennzeichnet,** daß in den Kuppelfeldern (KFI,KFII,KFIII) zwischen dem zweiten Trennschalter (4) und dem Kuppelschalter (3) eine Schottwand (14c, 14d) mit Durchführungen (13) für die Leitungsstücke (10) vorgesehen ist.

13. Längskupplung für Sammelschienen nach einem der vorangegangenen Ansprüche, **dadurch gekennzeichnet,** daß dem ersten Trennschalter (2) und dem zweiten TrennSchalter (4) jeweils an der dem Kuppelschalter (3) zugekehrten Seite kurzschlußfeste Erdungsschalter zugeordnet sind.

14. Längskupplung für Sammelschienen nach Anspruch 13, **dadurch gekennzeichnet,** daß die in jedem System eingesetzten ersten und zweiten Trennschalter (2,4) mit den Erdungsschaltern zu an sich bekannten Dreistellungsschaltern vereinigt sind, die jeweils über einen Antrieb aus der geschlossenen in die Trennstellung und danach in die Erdungsstellung schaltbar sind.

15. Längskupplung für Sammelschienen nach einem der Ansprüche 2 bis 10, **dadurch gekennzeichnet,** daß die Kuppelleitungen (8,9,18,22,28,29) aus einem gasisolierten, einpolig gekapselten Schienensystem angefertigt sind.

16. Längskupplung für Sammelschienen nach einem der Ansprüche 2 bis 10,

**dadurch gekennzeichnet,**

daß die Kuppelleitung (8,9,18) aus einem feststoffisolierten Schienensystem angefertigt ist.

17. Längskupplung für Sammelschienen nach einem der Ansprüche 2 bis 7,

**dadurch gekennzeichnet,**

daß als Kuppelschalter (3) Leistungsschalter mit Vakuum oder Druckgas als Löschmittel eingesetzt sind.

18. Längskupplung für Sammelschienen nach einem der Ansprüche 2 bis 7,

**dadurch gekennzeichnet,**

daß als Kuppelschalter (3) ein einschaltfester Lastschalter mit Vakuum oder Druckgas als Löschmittel eingesetzt ist.

19. Längskupplung für Sammelschienen nach Anspruch 18,

**dadurch gekennzeichnet,**

daß der Lastschalter als Mehrstellungsschalter ausgeführt ist und dabei zumindestens auch die Funktionen des zweiten Trennschalters und des zweiten Erdungsschalters übernimmt.

20. Längskupplung für Sammelschienen nach einem der Ansprüche 2 bis 9 und 18,

**dadurch gekennzeichnet,**

daß der Kuppelschalter (3) als Lasttrennschalter ausgeführt ist und anstelle des ersten und des zweiten Trennschalters (2,4) mit dem Lasttrennschalter verriegelbare Erdungsschalter vorgesehen sind.

Figur 1

Figur 2a

Figur 2b

Figur 3a

EP 0 372 261 A1

Figur 3b

Figur 3c

Figur 3d

Figur 3e

Figur 4a

Figur 4b

Figur 4c

Figur 4d

Figur 4e

Figur 5a

Figur 5b

Figur 6a

Figur 6b

Figur 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3522539 (MITSUBISHI DENKI KK) <br> * Spalte 1, Zeile 38 - Spalte 3, Zeile 17; Figuren 1, 3 * <br> --- | 1 | H02B13/035 |
| A | DE-U-1681782 (LICENTIA PATENT-VERWALTUNGS-GMBH) <br> * das ganze Dokument * <br> ----- | 1 | |

**RECHERCHIERTE SACHGEBIETE (Int. Cl.5 )**

H02B

Der vorliegende Recherchenbericht wurde für alle Patentansprüche erstellt

| Recherchenort | Abschlußdatum der Recherche | Prüfer |
|---|---|---|
| DEN HAAG | 05 MAERZ 1990 | WOODALL C.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 ...........................................................................

& : Mitglied der gleichen Patentfamilie, übereinstimmendes Dokument

EPO FORM 1503 03.82 (P0403)